# EUROPEAN PATENT APPLICATION

(11) **EP 4 836 338 A1**
(43) Date of publication of application: **04.11.2026**
(21) Application number: 24911392.9
(22) Date of filing: 27.12.2024
(51) Int. Cl.: H04L 5/00

(54) **COMMUNICATION METHOD, APPARATUS, TERMINAL DEVICE AND NETWORK DEVICE**

(30) Priority: 29.12.2023 CN 202311869286
(71) Applicant: Beijing Unisoc Communications Technology Co., Ltd, Beijing 100083 (CN)
(72) Inventor: WANG, Hualei, Beijing 100083 (CN); CHEN, Mimi, Beijing 100083 (CN)
(74) Representative: Murgitroyd & Company
(86) International application number: PCT/CN2024/142958
(87) International publication number: WO 2025/140471

(57) **Abstract**

The present application relates to the technical field of communications. Disclosed are a communication method, an apparatus, a terminal device and a network device. When AI technology is applied to a CSI framework, as a first AI model will perform CSI compression on input information in sequence, the present application needs to determine grouping of the input information. Thus, the first AI model can be used for performing CSI compression on first input information within a group, and using historical input information within the group for CSI compression on non-first input information within the group, so as to enhance CSI-related processing. Alternatively, as the input information and/or processing information of the first AI model that should have been reported may not be reported due to certain factors and is thus discarded, in the case of the discarding, the present application needs to determine CSI reporting of the input information and/or the processing information that should have been reported but fails to be reported, so as to enhance CSI-related processing.

## Description

The present disclosure claims the priority to the prior application No. 202311869286.2 filed on December 29, 2023, entitled "COMMUNICATION METHOD, APPARATUS, TERMINAL DEVICE AND NETWORK DEVICE", the entire content of which is incorporated herein by reference.

### TECHNICAL FIELD

The present disclosure relates to the technical field of communications, and in particular, to a communication method and apparatus, a terminal device, and a network device.

### BACKGROUND

The artificial intelligence (AI) technology may solve some problems that are difficult to solve using traditional modeling methods, such as some nonlinear problems and problems with overly complex parameters, by establishing a solution mode for some problems through training with a large amount of data and providing a relatively accurate prediction result. AI may include machine learning (ML), deep learning (DL), etc., and an AI model may include various types of linear and nonlinear network models, such as linear regression, vector machines, convolutional neural networks (CNN), deep neural networks (DNN), etc.

With the continuous development of the AI technology and the continuous evolution of wireless communication systems, the 3rd Generation Partnership Project (3GPP) is currently discussing the integration of the AI technology with the wireless communication systems. A discussion direction is to apply the AI technology to a channel state information (CSI) framework/field, to improve air interface performance and reduce air interface overhead. However, when the AI technology is applied to the CSI framework, how to enhance CSI-related processing still requires further study.

### SUMMARY

The present disclosure provides a communication method and apparatus, a terminal device, and a network device, to achieve enhancement of CSI-related processing when an AI technology is applied to a CSI framework.

In a first aspect, a communication method in the present disclosure includes:
determining grouping of first input information of a first AI model, or determining channel state information (CSI) reporting of first input information and/or first processing information;
where the first AI model is used for CSI compression, and the first processing information is information obtained by inputting the first input information into the first AI model or information obtained by further processing information obtained by inputting the first input information into the first AI model.

It can be seen that when an AI technology is applied to a CSI framework, for the enhancement of CSI compression and CSI recovery, since the first AI model performs CSI compression for input information in order, historical input information may participate in CSI compression of current input information, previously obtained processing information may be used as historical processing information to participate in the CSI compression of the current input information, and/or previously obtained compression intermediate information may be used as historical compression intermediate information to participate in the CSI compression of the current input information, so the present disclosure needs to determine grouping of the input information. In this way, the first AI model may be used to perform CSI compression on initial input information within a group, and perform CSI compression on non-initial input information within the group by using historical input information within the group, thereby achieving the enhancement of CSI-related processing.

Alternatively, when a terminal device needs to report/feed back input information and/or processing information, since some input information and/or processing information that should have been reported or fed back may not be reported due to some factors, dropping of input information and/or processing information occurs. In this way, for the input information and/or processing information that should have been reported but is not reported, this embodiment may determine the CSI reporting of the input information and/or processing information that should have been reported but is not reported, thereby achieving the enhancement of CSI-related processing.

In a second aspect, a communication method in the present disclosure includes:
sending configuration information, where the configuration information is used to configure a time window, and the time window is used to determine grouping of first input information of a first AI model; or
sending indication information, where the indication information is used to indicate grouping of first input information of a first AI model;
where the first AI model is used for channel state information (CSI) compression.

It can be seen that when an AI technology is applied to a CSI framework, for the enhancement of CSI compression and CSI recovery, since the first AI model performs CSI compression for input information in order, historical input information may participate in CSI compression of current input information, previously obtained processing information may be used as historical processing information to participate in the CSI compression of the current input information, and/or previously obtained compression intermediate information may be used as historical compression intermediate information to participate in the CSI compression of the current input information, so the present disclosure needs to determine grouping of the input information. In this way, the first AI model may be used to perform CSI compression on initial input information within a group, and perform CSI compression on non-initial input information within the group by using historical input information within the group, thereby achieving the enhancement of CSI-related processing.

In a third aspect, a communication method in the present disclosure includes:
in response to a first CSI report in which first input information and/or first processing information of a first AI model is included being not reported, receiving a second CSI report, where the second CSI report includes the first input information and/or the first processing information, or the second CSI report includes the first input information and/or the first processing information, and second input information and/or second processing information, where the first input information and the second input information are different input information; or
in response to a first CSI report in which first input information and/or first processing information of a first AI model is included being not reported, receiving the first input information and/or the first processing information at an available time domain position after a time domain position of the first CSI report; or
in response to a first CSI report in which first input information and/or first processing information of a first AI model is included being not reported, receiving a third CSI report, where the third CSI report includes third input information and/or third processing information, where the first input information and the third input information are different input information;
where the first AI model is used for CSI compression, the first processing information is information obtained by inputting the first input information into the first AI model or information obtained by further processing information obtained by inputting the first input information into the first AI model, the second processing information is information obtained by inputting the second input information into the first AI model or information obtained by further processing information obtained by inputting the second input information into the first AI model, and the third processing information is information obtained by inputting the third input information into the first AI model or information obtained by further processing information obtained by inputting the third input information into the first AI model.

It can be seen that when the first input information and/or the first processing information originally intended to be reported through the first CSI report, since the first CSI report fails to be reported, causing the first input information and/or the first processing information that should have been reported not to be reported, the first input information and/or the first processing information is carried through the second CSI report, thereby achieving continued reporting of the first input information and/or the first processing information that should have been reported but is not reported.

Alternatively, when the first input information and/or the first processing information that should have been reported fails to be reported, the first input information and/or the first processing information, and the second input information and/or the second processing information are carried through the second CSI report, thereby, through the second CSI report, postponing the reporting of the first input information and/or the first processing information, and reporting the second input information and/or the second processing information required to be reported in the second CSI report to avoid loss of the second input information and/or the second processing information.

Alternatively, when the first input information and/or the first processing information that should have been reported fails to be reported, the first input information and/or the first processing information is received at an available time domain position after a time domain position of the first CSI report, thereby achieving continued reporting/postponed reporting of the first input information and/or the first processing information.

Alternatively, when the first input information and/or the first processing information that should have been reported fails to be reported, the first input information and/or the first processing information is no longer reported, but the third input information and/or the third processing information is reported through the third CSI report, achieving reporting of new input information and/or new processing information, to avoid loss of the new input information and/or the new processing information.

In a fourth aspect, a communication apparatus in the present disclosure includes:
a determining unit, configured to grouping of first input information of a first AI model, or determine channel state information (CSI) reporting of first input information and/or first processing information;
where the first AI model is used for CSI compression, and the first processing information is information obtained by inputting the first input information into the first AI model or information obtained by further processing information obtained by inputting the first input information into the first AI model.

In a fifth aspect, a communication apparatus in the present disclosure includes:
a sending unit, configured to send configuration information, where the configuration information is used to configure a time window, and the time window is used to determine grouping of first input information of a first AI model; or configured to send indication information, where the indication information is used to indicate grouping of first input information of a first AI model;
where the first AI model is used for channel state information (CSI) compression.

In a sixth aspect, a communication apparatus in the present disclosure includes a receiving unit, where the receiving unit is configured to:
in response to a first CSI report in which first input information and/or first processing information of a first AI model is included being not reported, receive a second CSI report, where the second CSI report includes the first input information and/or the first processing information, or the second CSI report includes the first input information and/or the first processing information, and second input information and/or second processing information, where the first input information and the second input information are different input information; or
in response to a first CSI report in which first input information and/or first processing information of a first AI model is included being not reported, receive the first input information and/or the first processing information at an available time domain position after a time domain position of the first CSI report; or
in response to a first CSI report in which first input information and/or first processing information of a first AI model is included being not reported, receive a third CSI report, where the third CSI report includes third input information and/or third processing information, where the first input information and the third input information are different input information;
where the first AI model is used for CSI compression, the first processing information is information obtained by inputting the first input information into the first AI model or information obtained by further processing information obtained by inputting the first input information into the first AI model, the second processing information is information obtained by inputting the second input information into the first AI model or information obtained by further processing information obtained by inputting the second input information into the first AI model, and the third processing information is information obtained by inputting the third input information into the first AI model or information obtained by further processing information obtained by inputting the third input information into the first AI model.

In a seventh aspect, steps in the method designed in the above first aspect are applied to a terminal device or in a terminal device.

In an eighth aspect, steps in the method designed in the above second aspect are applied to a network device or in a network device.

In a ninth aspect, a terminal device in the present disclosure includes a processor, a memory, and a computer program or instructions stored in the memory, where the processor executes the computer program or instructions to implement the steps in the method designed in the above first aspect.

In a tenth aspect, a network device in the present disclosure includes a processor, a memory, and a computer program or instructions stored in the memory, where the processor executes the computer program or instructions to implement the steps in the method designed in the above second aspect or third aspect.

In an eleventh aspect, a chip in the present disclosure includes a processor, where the processor performs the steps in the method designed in the above first aspect, second aspect, or third aspect.

Optionally, the chip further includes a communication interface, where the processor performs the sending step and/or receiving step in the method designed in the above first aspect, second aspect, or third aspect through the communication interface.

In a twelfth aspect, a chip module in the present disclosure includes a chip, where the chip includes a processor, and the processor performs the steps in the method designed in the above first aspect, second aspect, or third aspect.

Optionally, the chip module further includes a transceiver component, where the processor performs the sending step and/or receiving step in the method designed in the above first aspect, second aspect, or third aspect through the transceiver component.

In a thirteenth aspect, a computer-readable storage medium in the present disclosure stores a computer program or instructions, where the computer program or instructions, when executed, implement the steps in the method designed in the above first aspect, second aspect, or third aspect. For example, the computer program or instructions are executed by a processor.

In a fourteenth aspect, a computer program product in the present disclosure includes a computer program or instructions, where the computer program or instructions, when executed, perform the steps in the method designed in the above first aspect, second aspect, or third aspect. For example, the computer program or instructions are executed by a processor.

In a fifteenth aspect, a communication system in the present disclosure includes a communication apparatus (for example, a terminal device or a chip), configured to perform any method provided in the first aspect, and/or includes a communication apparatus (for example, a network device or a chip) configured to perform any method provided in the second aspect or the third aspect.

For beneficial effects from the technical solutions of the second aspect to the fifteenth aspect, reference may be made to the technical effects from the technical solution of the first aspect, which are not repeated herein.

### BRIEF DESCRIPTION OF THE DRAWINGS

FIG. 1 is a schematic diagram of an architecture of a communication system in the embodiments of the present disclosure.
FIG. 2 is a structural schematic diagram of a measurement resource configuration in the embodiments of the present disclosure.
FIG. 3 is a structural schematic diagram of a two-sided AI model in the embodiments of the present disclosure.
FIG. 4 is a structural schematic diagram of an enhanced two-sided AI model in the embodiments of the present disclosure.
FIG. 5 is a structural schematic diagram of another enhanced two-sided AI model in the embodiments of the present disclosure.
FIG. 6 to FIG. 11 are flow schematic diagrams of a monitoring method in the embodiments of the present disclosure, respectively.
FIG. 12 is a block diagram of functional units of a communication apparatus in the embodiments of the present disclosure.
FIG. 13 is a block diagram of functional units of another communication apparatus in the embodiments of the present disclosure.
FIG. 14 is a block diagram of functional units of another communication apparatus in the embodiments of the present disclosure.
FIG. 15 is a structural schematic diagram of a terminal device in the embodiments of the present disclosure.
FIG. 16 is a structural schematic diagram of a network device in the embodiments of the present disclosure.
FIG. 17 is a structural schematic diagram of another network device in the embodiments of the present disclosure.

### DETAILED DESCRIPTION

It should be understood that the terms "first", "second", etc., involved in the embodiments of the present disclosure are used to distinguish different objects, rather than to describe a specific order. In addition, the terms "include" and "have" and any variations thereof are intended to cover non-exclusive inclusion. For example, a process, method, software, product, or device that includes a series of steps or units is not limited to the listed steps or units, but may also include steps or units not listed, or may also include other steps or units inherent to the process, method, product, or device.

The "embodiment" involved in the embodiments of the present disclosure means that specific features, structures, or characteristics described in conjunction with the embodiment may be included in at least one embodiment of the present disclosure. The appearances of this phrase in various places in the specification do not necessarily all refer to the same embodiment, and also are not mutually exclusive, independent, or alternative with respect to other embodiments. It is explicitly and implicitly understood by those skilled in the art that the embodiments described herein may be combined with other embodiments.

"And/or" in the embodiments of the present disclosure describes an association relationship of associated objects, indicating that three relationships may exist. For example, A and/or B may indicate the following three cases: A exists alone; both A and B exist; B exists alone. Herein, A, B may be singular or plural.

In the embodiments of the present disclosure, the symbol "/" may indicate that the associated objects before and after "/" are in an "or" relationship.

"At least one item (or at least one)" or similar expressions in the embodiments of the present disclosure refer to any combination of the items, including any combination of singular items (or single ones) or plural items (or plural ones), and refer to one or more, where "more" refers to two or more than two. For example, at least one item (or at least one) of a, b, or c may indicate the following seven cases: "a", "b", "c", "a and b", "a and c", "b and c", "a, b and c". Herein, each of a, b, c may be an element, or may be a set containing one or more elements.

In the embodiments of the present disclosure, "higher than" may be expressed as the same concept as "greater than", "lower than" may be expressed as the same concept as "less than", "not lower than" may be expressed as the same concept as "higher than or equal to" or "greater than or equal to", and "not higher than" may be expressed as the same concept as "lower than or equal to" or "less than or equal to". In the present disclosure, for the same solution, "equal to" may be used in conjunction with "less than", and may also be used in conjunction with "greater than", but not used in conjunction with both "less than" and "greater than". When "equal to" is used in conjunction with "less than", it is applicable to the technical solution adopted by "less than". When "equal to" is used in conjunction with "greater than", it is applicable to the technical solution adopted by "greater than".

In the embodiments of the present disclosure, "of", "corresponding/relevant", "corresponding", "indicated", "associated", etc., may be used interchangeably.

In the embodiments of the present disclosure, "associated", "corresponding/relevant", "corresponding", "is/are/be", "of", "as", "belonging to", "used as", "regarded as" may sometimes be used interchangeably.

In the embodiments of the present disclosure, "monitoring metric/mechanism" and "monitoring method/approach/scheme/solution", etc., may be used interchangeably.

In the embodiments of the present disclosure, "connection" refers to various connection methods such as direct connection or indirect connection, to achieve communication between devices, which is not limited thereto.

In the embodiments of the present disclosure, "network" and "system" may be expressed as the same concept, and a communication system is a communication network.

Related contents, concepts, meanings, technical problems, technical solutions, and beneficial effects, etc., involved in the embodiments of the present disclosure are described below.

### I. Communication system, terminal device, and network device

### [Communication System]

The technical solutions of the embodiments of the present disclosure may be applied to various communication systems, such as: Long Term Evolution (LTE) systems, Advanced Long Term Evolution (LTE-A) systems, New Radio (NR) systems, evolution systems of NR systems, LTE-based Access to Unlicensed Spectrum (LTE-U) systems, NR-based Access to Unlicensed Spectrum (NR-U) systems, Non-Terrestrial Networks (NTN) systems, Universal Mobile Telecommunication System (UMTS), 6th-Generation (6G) communication systems, or other communication systems, etc.

It should be noted that the number of connections supported by a traditional communication system is limited, and with the development of communication technologies, a communication system of the present disclosure may be not only a traditional communication system, but also belong to device-to-device (D2D) communication, machine-to-machine (M2M) communication, machine type communication (MTC), vehicle-to-vehicle (V2V) communication, vehicle-to-everything (V2X) communication, narrow band internet of things (NB-IoT) communication, etc.

Optionally, the technical solutions of the embodiments of the present disclosure may be applied to beamforming, carrier aggregation (CA), dual connectivity (DC), or standalone (SA) deployment scenarios, etc.

Optionally, a spectrum used for communication between a terminal device and a network device may be a licensed frequency band or an unlicensed frequency band, which is not limited thereto. In addition, the unlicensed frequency band may be understood as a shared frequency band, and the licensed spectrum may be understood as a non-shared frequency band.

Since the embodiments of the present disclosure describe various embodiments in conjunction with a terminal device and a network device, the involved terminal device and network device will be specifically described below.

### [Terminal device]

The terminal device may be a device with a transceiving function, and may also be referred to as a terminal, user equipment (UE), remote terminal device (remote UE), relay device (relay UE), access terminal device, user unit, user station, mobile station, mobile platform, remote station, mobile device, user terminal device, intelligent terminal device, wireless communication device, user agent, or user apparatus. It should be noted that the relay device is a terminal device capable of providing relay forwarding services for other terminal devices (including a remote terminal device).

Optionally, the terminal device is a mobile phone, a tablet computer (Pad), a computer with a wireless transceiving function, a virtual reality (VR) terminal device, an augmented reality (AR) terminal device, a wireless terminal device in industrial control, a wireless terminal device in unmanned autonomous driving, a wireless terminal device in remote medical, a wireless terminal device in a smart grid, a wireless terminal device in transportation safety, a wireless terminal device in a smart city, or a wireless terminal device in a smart home, etc.

Optionally, the terminal device may be a cellular phone, a cordless phone, a session initiation protocol (SIP) phone, a wireless local loop (WLL) station, a personal digital assistant (PDA), a handheld device, a computing device or other processing devices connected to a wireless modem with a wireless communication function, a vehicle-mounted device, a wearable device, a terminal device in a next-generation communication system (such as an NR communication system, a 6G communication system), or a terminal device in a future evolved public land mobile network (PLMN), etc., which is not limited thereto.

Optionally, the terminal device is deployed on land, including indoors or outdoors, handheld, wearable, or vehicle-mounted; may be deployed on water (such as on a ship, etc.); may be deployed in the air (such as an airplane, a balloon, and a satellite, etc.).

Optionally, the terminal device includes an apparatus with a wireless communication function, such as a chip system, a chip, or a chip module. For example, the chip system may include a chip, and may also include other discrete devices.

Optionally, the terminal device may include a chip, a chip module, an apparatus, a unit, etc., which is not limited thereto.

Optionally, the terminal device includes an intelligent module. Herein, the intelligent module may be a software unit and/or a hardware unit that uses an AI model to perform air interface transmission processing. For example, the intelligent module may be used to perform processing such as compression/decompression for channel-related information.

Optionally, the intelligent module includes a chip, a chip module, etc.

### [Network device]

The network device may be a device with a transceiving function, and may be used to communicate with a terminal device.

Optionally, the network device may be responsible for radio resource management (RRM), quality of service (QoS) management, data compression and encryption, data reception and transmission, etc., on the air interface side.

Optionally, the network device may include a base station (BS) in the communication system or a device deployed in a radio access network (RAN) for providing a wireless communication function, that is, the network device may include a device in the RAN.

For example, the device in the RAN may include an evolutional node B (eNB or eNodeB) in an LTE communication system, a next generation evolved node B (ng-eNB) in an NR communication system, a next generation node B (gNB) in an NR communication system, a master node (MN) in a dual connection architecture, a second node or a secondary node (SN) in a dual connection architecture, etc., which is not limited thereto.

Optionally, the network device includes a device in a core network (CN).

For example, the device in the CN may include an access and mobility management function (AMF), a user plane function (UPF), a session management function (SMF), etc.

Optionally, the network device further includes an access point (AP) in a Wireless Local Area Network (WLAN), a relay station, a communication device in a future evolved PLMN network, a communication device in an NTN network, etc.

Optionally, the network device may include an apparatus, such as a chip system, a chip, or a chip module, having a function of providing wireless communication for a terminal device. For example, the chip system may include a chip, or may include other discrete devices.

Optionally, the network device may include a transmission and reception point (TRP).

Optionally, the network device may communicate with an Internet Protocol (IP) network, for example, the internet, a private IP network, or another data network, etc.

Optionally, the network device may include an independent node to implement the functions of the above base station, or may include two or more independent nodes to implement the functions of the above base station. For example, the network device includes a centralized unit (CU) and a distributed unit (DU), such as gNB-CU and gNB-DU. Further, in some other embodiments of the present disclosure, the network device may further include an active antenna unit (AAU). Herein, the CU implements a part of the functions of the network device, and the DU implements another part of the functions of the network device. For example, the CU is responsible for processing non-real-time protocols and services, implementing functions of a radio resource control (RRC) layer, a service data adaptation protocol (SDAP) layer, and a packet data convergence protocol (PDCP) layer. The DU is responsible for processing physical layer protocols and real-time services, implementing functions of a radio link control (RLC) layer, a medium access control (MAC) layer, and a physical (PHY) layer. In addition, the AAU may implement a part of physical layer processing functions, functions related to radio frequency processing and an active antenna. Since information of the RRC layer will finally become information of the PHY layer or be transformed from information of the PHY layer, higher layer signaling (such as RRC signaling) may be considered to be generated by the CU and sent by the DU, or jointly sent by the DU and the AAU, under this network deployment. It can be understood that the network device may include at least one of the CU, the DU, and the AAU. In addition, the CU may be classified as a RAN device, or the CU may also be classified as a core network device, which is not limited thereto.

Optionally, the network device may be any station among multiple stations that perform a coherent joint transmission (CJT) with a terminal device, or another station other than the multiple stations, or another network device that performs a network communication with the terminal device, which is not limited thereto. Herein, the multi-station coherent joint transmission may be a joint coherent transmission by multiple stations, or different data belonging to the same physical downlink shared channel (PDSCH) being sent from different stations to the terminal device, or multiple stations virtualized as a station performing a transmission, or a coodination transmission in other manners, or names with the same meaning specified in other standards are also applicable to the present disclosure, that is, the present disclosure does not limit the names of these parameters. A station in the multi-station coherent joint transmission may be a Remote Radio Head (RRH), a TRP, etc., which is not specifically limited thereto.

Optionally, the network device may be any station among multiple stations that perform a non-coherent joint transmission with a terminal device, or another station other than the multiple stations, or another network device that performs a network communication with the terminal device, which is not specifically limited thereto. Herein, the multi-station non-coherent joint transmission may be a joint non-coherent transmission of multiple stations, or different data belonging to the same PDSCH being sent from different stations to the terminal device, or non-coodination transmission in other manners, or names with the same meaning specified in other standards are also applicable to the present disclosure, that is, the present disclosure does not limit the names of these parameters. A station in the multi-station non-coherent joint transmission may be an RRH, a TRP, etc., which is not specifically limited thereto.

It should be noted that the TRP of the present disclosure is not limited to coherent joint transmission or non-coherent joint transmission scenarios, and may also be applicable to other scenarios, which is not specifically limited thereto.

Optionally, the network device may have a mobility characteristic, for example, the network device may be a mobile device. Optionally, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station disposed on a position such as land, water, etc.

Optionally, the network device may provide a service for a cell, and a terminal device in the cell may communicate with the network device through a transmission resource (such as spectrum resource). Herein, the cell may be a macro cell, a small cell, a metro cell, a micro cell, a pico cell, a femto cell, etc.

Optionally, the network device may be a chip, a chip module, an apparatus, or a unit, etc., which is not specifically limited thereto.

Optionally, the network device may include an intelligent module. Herein, the intelligent module may be a software unit and/or a hardware unit that uses an AI model to perform air interface transmission processing. For example, the intelligent module may be used to perform processing such as compression/decompression for channel-related information.

Optionally, the intelligent module may be a chip, a chip module, etc.

### [Exemplary illustration]

An exemplary illustration of a communication system in the embodiments of the present disclosure is given below.

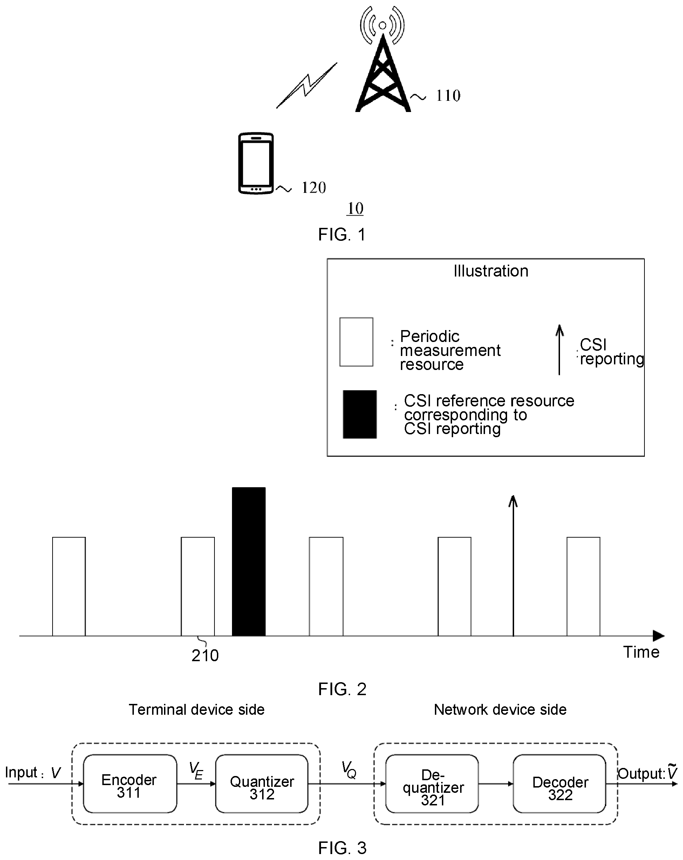

Exemplarily, for a network architecture of a communication system in the embodiments of the present disclosure, reference may be made to FIG. 1. As shown in FIG. 1, a communication system 10 may include a network device 110 and a terminal device 120. The terminal device 120 may communicate with the network device 110 in a wireless manner.

FIG. 1 is only an exemplary illustration of a network architecture of a communication system, and does not constitute a limitation on the network architecture of the communication system in the embodiments of the present disclosure.

For example, the communication system 10 may further include a server or other devices.

For another example, the communication system 10 may include other network devices in addition to the network device 110.

For another example, the communication system 10 may include other terminal devices in addition to the terminal device 120.

### II. Integration of AI technology and CSI framework

### 1. CSI-related configuration

### [Measurement resource]

The CSI-related configuration may include a CSI resource configuration and/or a CSI report configuration, and may be defined by a higher layer parameter CSI-MeasConfig (CSI measurement configuration). Herein, the higher layer parameter CSI-MeasConfig may indicate/configure/include the following two higher layer parameters: CSI-ResourceConfig (CSI resource configuration) and CSI-ReportConfig (CSI report configuration).

Since the higher layer parameter CSI-ReportConfig may indicate/include a parameter CSI-ResourceConfigId (CSI resource configuration identity), the higher layer parameter CSI-ResourceConfig is associated with/corresponds to/maps to the higher layer parameter CSI-ReportConfig, via the parameter CSI-ResourceConfigId.

The higher layer parameter CSI-ReportConfig may be used for a configuration of a CSI report, that is, configuring the CSI report.

The higher layer parameter CSI-ResourceConfig may be used to configure a measurement resource for CSI measurement. In addition, the higher layer parameter CSI-ResourceConfig may configure a parameter CSI-Resource-Set (CSI resource set), and the parameter CSI-Resource-Set may contain a most basic channel state information-reference signal (CSI-RS) resource.

The parameter CSI-Resource-Set may indicate/include at least one of: a parameter Non-Zero-Power-CSI-RS-ResourceSet (NZP-CSI-RS-ResourceSet), a parameter CSI-Interference-Measurement-ResourceSet (CSI-IM-ResourceSet), and a parameter CSI-synchronizing-signal-block-ResourceSet (CSI-SSB-ResourceSet).

The parameter NZP-CSI-RS-ResourceSet may be used for channel measurement and/or interference measurement; the parameter CSI-IM-ResourceSet may be used for interference measurement; the parameter CSI-SSB-ResourceSet may be used for channel measurement.

The parameter CSI-ResourceConfig and/or the parameter NZP-CSI-RS-ResourceSet may configure one or more NZP-CSI-RS resource sets. Each NZP-CSI-RS resource set may include K (K≥1) NZP-CSI-RS resources.

For example, the network device sends a CSI resource configuration (CSI resource setting) to the terminal device through RRC signaling, each CSI resource setting includes S (S≥1, and S is an integer) CSI resource sets, and each CSI resource set includes K (K≥1, and K is an integer) NZP-CSI-RS resources. The terminal device may receive CSI-RS on the K NZP-CSI-RS resources indicated by the network device.

To sum up, the measurement resource may include at least one of an NZP-CSI-RS resource, a CSI-IM resource, and a CSI-SSB resource. The NZP-CSI-RS resource may be used for channel measurement and/or interference measurement; the CSI-IM resource may be used for interference measurement; the CSI-SSB resource may be used for channel measurement.

In addition, the measurement resource may also include a channel measurement resource (CMR) and/or an interference measurement resource (IMR). Herein, the channel measurement resource refers to a measurement resource used for channel measurement, such as an NZP-CSI-RS resource or a CSI-SSB resource; the interference measurement resource refers to a measurement resource used for interference measurement, such as an NZP-CSI-RS resource or a CSI-IM resource.

### [Time domain behavior]

The time domain behavior may include periodic, semi-persistent, and aperiodic. Herein, the time domain behavior includes a time domain behavior of a measurement resource and a time domain behavior of a CSI report. Specific descriptions are respectively given below.

The time domain behavior of the measurement resource may include a periodic measurement resource, an aperiodic measurement resource, and a semi-persistent measurement resource. Herein, the time domain behavior of the measurement resource may be indicated by a higher layer parameter (such as resource type (resourceType)).

For the periodic measurement resource, after the network device configures the periodic measurement resource, the network device will periodically send the measurement resource.

For the aperiodic measurement resource, after the network device configures the aperiodic measurement resource, the network device will not immediately send the measurement resource, but will trigger it via trigger signaling, and then send the aperiodic measurement resource to the terminal device after the trigger.

For the semi-persistent measurement resource, after the network device configures the semi-persistent measurement resource, the network device will not immediately send a CSI-RS, but will first send an activation signaling, and then send the semi-persistent measurement resource to the terminal device after being activated. Herein, once the network device triggers the sending of the semi-persistent measurement resource, it will periodically send the measurement resource until the network device delivers deactivation signaling.

The time domain behavior of the CSI report may include a periodic CSI report, an aperiodic CSI report, a semi-persistent CSI report carried on a physical uplink control channel (PUCCH), and a semi-persistent CSI report carried on a physical uplink shared channel (PUSCH). Herein, the time domain behavior of the CSI report may be indicated by a higher layer parameter (such as report configuration type (reportConfigType)).

For the aperiodic CSI report and the semi-persistent CSI report carried on the PUSCH, the network device will also configure a higher layer parameter TriggerState and a higher layer parameter reportTriggerSize, to be used with a CSI request field in downlink control information (DCI).

For the periodic CSI report, after configuring periodic CSI-RS Resource and a Report parameter via RRC signaling, it will take effect immediately without activating/triggering sending of the measurement resource and CSI report via MAC-CE/DCI.

For the semi-persistent CSI report carried on the PUCCH, if the sending of the semi-persistent measurement resource is configured via RRC signaling, it needs to first activate the sending of the measurement resource via MAC CE1, and then activate the CSI report via MAC CE2; if the sending of the periodic measurement resource is configured via RRC signaling, it does not need to activate the sending of the measurement resource via MAC CE1, but only needs to activate the CSI report via MAC CE2.

For the semi-persistent CSI report carried on the PUSCH, if the sending of the semi-persistent measurement resource is configured via RRC signaling, it needs to first activate the sending of the measurement resource via MAC CE1, and then trigger the CSI report via DCI; if the sending of the periodic measurement resource is configured via RRC signaling, it does not need to activate the sending of the measurement resource via MAC CE1, but only needs to trigger the CSI report via DCI.

It should be noted that, for DCI, the DCI may be a DCI format 0_1 scrambled by using an SP-CSI-RNTI (semi-persistent CSI RNTI), and a CSI request field in the DCI may associate a corresponding trigger state (TriggerState) by the setting of a codepoint, and the TriggerState will define an associated CSI-ReportConfig, so that the CSI-ReportConfig associated with the semi-persistent CSI report carried on the PUSCH may be found by the TriggerState.

For an aperiodic CSI report, the aperiodic CSI report is triggered by DCI, and its process is similar to that of the above semi-persistent CSI report. When associating the corresponding TriggerState by the codepoint of the CSI request field in the DCI format 0_1/0_2, unlike the DCI trigger of the above semi-persistent CSI report, if the value of the CSI request field is 0, it indicates that the trigger of the semi-persistent CSI report is not required; if the value of the CSI request field is 1, it indicates that the aperiodic CSI report associated with TriggerState 1 is triggered, and so on.

**Table 1**

| Measurement resource configuration | Periodic CSI report | Semi-persistent CSI report | Aperiodic CSI report |
|---|---|---|---|
| Periodic measurement resource | Non-dynamic activation/trigger | For reporting carried on a PUCCH, the terminal device activates by receiving an activation command; for reporting carried on a PUSCH, the terminal device triggers by receiving DCI. | Triggered by DCI |
| Semi-persistent measurement resource | Not supported | For reporting carried on a PUCCH, the terminal device activates by receiving an activation command; for reporting carried on a PUSCH, the terminal device triggers by receiving DCI. | Triggered by DCI |
| Aperiodic measurement resource | Not supported | Not supported | Triggered by DCI |

It should be noted that the CSI report configuration is related to the measurement resource configuration, as shown in Table 1. In Table 1, for a periodic CSI report, it can only be associated with/use a periodic resource; for a semi-persistent CSI report carried on the PUCCH, it can be associated with/use a periodic measurement resource and a semi-persistent measurement resource, and be activated/deactivated via an MAC CE; for a semi-persistent CSI report carried on the PUSCH, it can be associated with/use a periodic measurement resource and a semi-persistent measurement resource, and be triggered via DCI; for an aperiodic CSI report, it can be associated with/use a periodic measurement resource, a semi-persistent measurement resource, and an aperiodic measurement resource, and be triggered via DCI.

### [CSI measurement and CSI reporting]

In the processes of CSI measurement, CSI acquisition, and CSI reporting, the terminal device may perform channel measurement/interference measurement on a downlink channel according to a measurement resource, to obtain channel information/CSI information, and then report the channel information/CSI information to the network device.

Optionally, the CSI information includes at least one of: a CSI reference signal resource indication index (CSI-RS Resource indicator, CRI), a synchronizing signal block resource indication index (SSB resource indicator, SSBRI), a rank indication index (rank indicator, RI), a precoding matrix indication index (precoding matrix indicator, PMI), a channel quality indication index (channel quality indicator, CQI), a layer indication index (layer indicator, LI), a capability index (CapabilityIndex), time-domain channel properties (TDCP), etc.

It should be noted that the CRI may indicate a CSI-RS resource recommended (or selected) by the terminal device, and the SSBRI may indicate an SSB resource recommended (or selected) by the terminal device. Herein, a CSI-RS resource may represent a beam or antenna direction, and a SSB resource may represent a beam or antenna direction.

The RI may indicate the number of layers recommended (or selected) by the terminal device, and the number of layers may decide which codebook. Herein, each number of layers corresponds to a codebook, and a codebook consists of one or more codewords. For example, it is a codebook with a number of layers of 2 or a codebook with a number of layers of 1.

The PMI may indicate an index of a codeword in a codebook recommended (or selected) by the terminal device, or quantized precoding information. Herein, a codeword corresponds to a precoding matrix. The RI and the PMI may collectively indicate the number of layers and the precoding matrix recommended by the terminal device.

The CQI may indicate the channel quality of a current channel being good or bad, fed back by the terminal device to the network device. Herein, the terminal device needs to calculate the CQI.

Optionally, the channel information may include related information obtained by performing channel measurement according to a reference signal (such as a CSI-RS, a DMRS, an SSB, etc.).

For example, the channel information includes at least one of: a channel matrix *H*, an equivalent channel matrix, a precoding matrix *W* (the precoding matrix *W* may be derived from the channel matrix *H*), a right singular vector *V* of the channel matrix *H*, an eigenvector of a square matrix *H^{T}H* (that is, an eigenvector of a matrix obtained by multiplying a conjugate transpose *H^{T}* of the channel matrix by the channel matrix *H*), at least one vector associated with the channel matrix *H* (such as at least one vector of the channel matrix *H* under some deformation, etc.), time-domain information of a channel, channel information in a delay-doppler domain, CRI, SSBRI, RI, PMI, CQI, LI, CSI, etc.

### [CSI reference resource]

It should be noted that the CSI report corresponds to a CSI reference resource. For example, for a periodic CSI report, CSI is reported periodically, and each CSI report corresponds to a CSI reference resource.

The time domain of the CSI reference resource may be a slot, and the frequency domain of the CSI reference resource may be a frequency resource for acquiring CSI measurement.

Optionally, when an uplink slot in which the CSI report is located is a slot *n'* (*n'* represents a slot index), a downlink slot in which the CSI reference resource is located is a slot $n - {n}_{CSI _ ref} - {K}_{offset} ⋅ \frac{{2}^{{μ}_{DL}}}{{2}^{{μ}_{{K}_{offset}}}}$ ; *K_{offset}* represents a parameter configured by a higher layer, *µ_{Koffset}* represents a subcarrier spacing configuration in a frequency range 1 and under *K_{offset}* = 0 , and *µ_{DL}* represents a downlink subcarrier spacing configuration.

Since the CSI reference resource is a downlink resource, the time domain of the CSI reference resource is a downlink slot. In this way, the slot *n* represents a downlink slot corresponding to the slot *n',* and is calculated as follows: $n = n ′ ⋅ \left⌊\frac{{2}^{{μ}_{DL}}}{{2}^{{μ}_{UL}}}\right⌋ + \left⌊\left(\frac{{N}_{slot , offset , UL}^{CA}}{{2}^{{μ}_{offset , UL}}}-\frac{{N}_{slot , offset , DL}^{CA}}{{2}^{{μ}_{offset , DL}}}\right)⋅{2}^{{μ}_{DL}}\right⌋ ;$ where *µ_{UL}* represents an uplink subcarrier spacing configuration, ${N}_{slot , offset , DL}^{CA}$ represents a downlink slot offset, *µ_{offset,DL}* represents a maximum value among a minimum value of a downlink subcarrier spacing configuration of a primary cell (Pcell)/primary secondary cell (PScell) and a minimum value of a downlink subcarrier spacing configuration of a secondary cell (Scell), ${N}_{slot , offset , UL}^{CA}$ represents an uplink slot offset, and *µ_{offset,UL}* represents a maximum value among a minimum value of an uplink subcarrier spacing configuration of the Pcell/PScell and a minimum value of an uplink subcarrier spacing configuration of the Scell.

*n_{CSI_ref}* represents a slot offset between the slot *n* and a valid downlink slot, and the CSI reference resource is located in the valid downlink slot. Herein, whether a downlink slot is a "valid downlink slot" needs to satisfy the following conditions: the downlink slot includes at least one downlink symbol or flexible symbol configured by higher layer signaling; and/or the downlink slot is not within a configured measurement gap.

Optionally, for a periodic or semi-persistent CSI report, if the CSI report is associated with a channel measurement resource (such as a CSI-RS/SSB used for channel measurement), *n_{CSI_ref}* is a minimum value among values greater than or equal to 4 - *2*^{µ}*^{DL},* that enables the CSI reference resource corresponding to the CSI report to be located in the valid downlink slot.

For example, it is assumed that the uplink and downlink subcarrier spacing configurations are the same, that is, *µ_{DL}* = *µ_{UL}* = 0. Starting from the minimum value among values greater than or equal to 4 · 2^{µ*DL*}, let *n_{CSI_ref}* be 4 · 2^{µ*DL*}, $n - {n}_{CSI _ ref} - {K}_{offset} ⋅ \frac{{2}^{{μ}_{DL}}}{{2}^{{μ}_{{K}_{offset}}}} = n - 4$ is calculated, and whether the slot *n* - 4 is a valid downlink slot is determined. If the slot *n* - 4 is a valid downlink slot, the CSI reference resource is located in the slot *n* - 4; if the slot *n* - 4 is not a valid downlink slot, let *n_{CSI_ref}* be 5 · 2^{µ*DL*}, $n - {n}_{CSI _ ref} - {K}_{offset} ⋅ \frac{{2}^{{μ}_{DL}}}{{2}^{{μ}_{{K}_{offset}}}} = n - 5$ is calculated, and whether the slot *n* - 5 is a valid downlink slot is determined. If the slot *n* - 5 is a valid downlink slot, the CSI reference resource is located in the slot *n -* 5; if the slot *n* - 5 is not a valid downlink slot, continue to search forward, until a valid downlink slot is found.

Optionally, for a periodic or semi-persistent CSI report, if the CSI report is associated with multiple channel measurement resources (such as multiple CSI-RSs/SSBs used for channel measurement), *n*_{*CSI*_*ref*} is a minimum value among values greater than or equal to 5 · 2^{µ*DL*}, that enables the CSI reference resource corresponding to the CSI report to be located in a valid downlink slot.

Optionally, for an aperiodic CSI report, if the DCI used to trigger the CSI report is in the same slot as the CSI report, the CSI reference resource is located in the slot in which the DCI is located; otherwise, *n*_{*CSI*_*ref*} is a minimum value among values greater than or equal to $\left⌊Z′/{N}_{symb}^{slot}\right⌋$, that enables the CSI reference resource corresponding to the CSI report to be located in a valid downlink slot, ${N}_{symb}^{slot}$ represents the number of symbols included in a slot, and *Z'* represents processing time for the CSI calculation.

Optionally, the CSI reference resource may have the following two functions.

Function I: it is used to calculate a channel quality indicator (CQI).

Channel measurement essentially depends on an implementation of the terminal device. For example, some terminal devices have a very strong capability and can achieve a target block error rate (BLER) requirement by using a certain modulation and coding scheme (MCS) when SINR=10dB. However, some terminal devices have a weak capability, and can achieve the target BLER (the target BLER is configured by the network device) requirement when SINR = 12dB. Therefore, if the SINRs measured by two terminal devices is both 10dB, they may feed back different CQI values.

Furthermore, even for the same terminal device, different data packet sizes (transport block sizes, TBSs) will result in different BLERs. For example, SINR = 10dB. If the currently transmitted TBS is 1000bit, and a specific MCS is selected for the transmission, its BLER is 0.01. If a TBS of 500bit is adopted and the same MCS is selected for the transmission, its corresponding BLER may be 0.1. The two cases are different.

Therefore, when quantizing the CQI, it is necessary to use a concept of the CSI reference resource, so that the terminal device obtains the CQI/CSI through the CSI reference resource.

It is assumed that the terminal device adopts a CSI-RS to perform channel measurement to obtain a channel state, such as SINR. The terminal device will assume that a downlink data packet is transmitted on the CSI reference resource, and the corresponding channel state is obtained from the CSI-RS measurement. In this case, the terminal device selects a CQI from a CQI table, and this CQI can enable the BLER when the assumed transmitted downlink data packet is transmitted under the measured channel state to be less than a target BLER.

Function II: it is used to determine a measurement resource associated with a CSI report.

The network device may configure one or more measurement resources for CSI measurement to the terminal device. Herein, the time domain position of the measurement resource associated with the CSI report may be located before the CSI reference resource corresponding to the CSI report. That is, a measurement resource located before the CSI reference resource corresponding to the CSI report may be used as the measurement resource associated with the CSI report, and as for which measurements may be used as the measurement resource associated with the CSI report, it may be determined by a higher layer signaling configuration, protocol specification, pre-configuration, or autonomous determination by the terminal device.

For example, taking a periodic measurement resource as an example, as shown in FIG. 2, the periodic measurement resource includes a measurement resource associated with the CSI report, and the time domain position of the measurement resource associated with the CSI report is located before the CSI reference resource corresponding to the CSI report. That is, only measurement resources before the CSI reference resource corresponding to the CSI report may be used as the measurement resource associated with the CSI report, and as for which resource measurement(s) may be used as the measurement resource associated with the CSI report, it may be further configured by the network via higher layer signaling. For example, the network may configure a resource measurement 210 that is the latest/adjacent to the CSI reference resource, as the measurement resource associated with the CSI report.

It should be noted that this embodiment does not impose specific restrictions on the content in the "CSI reference resource", and the content of this part also does not exclude new contents included in further evolution of standard protocols.

### 2. Enhancement of CSI-related processing

### [Description]

AI may include ML, DL, etc., and an AI model may have a certain model parameter and a model architecture, etc., and the AI model may include various types of linear and nonlinear network models, such as linear regression, vector machine, CNN, DNN, etc.

It should be noted that the "AI model" appearing in this embodiment may be understood as an ML model, a DL model, an intelligent model, an AI algorithm, an AI module, or an intelligent module, etc., which is not specifically limited thereto.

When the AI technology is applied to the CSI framework, the AI model may be used for CSI compression and CSI resume/recovery, so as to achieve communication intelligence and reduce air interface overhead, etc.

Of course, in addition to the CSI compression and CSI recovery, it may also include other processing in the communication process, such as encoding/decoding, quantization/dequantization, etc., which is not specifically limited thereto.

### [Enhancement of CSI compression and CSI recovery]

In the process of CSI measurement/CSI reporting, the terminal device may perform channel measurement/interference measurement according to a measurement resource to obtain channel information/CSI information. However, the channel information/CSI information may have a characteristic such as a large number of bits, and directly feeding back the channel information/CSI information by a CSI report will lead to problems such as occupying more resources and large signaling overhead. Therefore, in order to reduce the occupied resources and signaling overhead, in this embodiment, CSI compression may be performed on the channel information/CSI information, so that the compressed information has a characteristic such as a smaller number of bits. CSI recovery corresponds to CSI compression, so that the compressed information is recovered to the original channel information/CSI information through the CSI recovery.

In the traditional CSI compression and CSI recovery processes, the terminal device may input the channel information/CSI information into its own AI model (of course, the AI model may be regarded as an "encoder or a CSI compression model, etc.") to perform compression and other processing, to obtain processing information, and finally send the processing information to the network device. Herein, in this embodiment, the information input into the AI model of the terminal device may be referred to as "input information".

In addition, the "processing information" in this embodiment may be information obtained by inputting the input information into the AI model or information obtained by further processing information obtained by inputting the input information into the AI model. Herein, the information obtained by inputting the input information into the AI model may include CSI compression information; the "further processing" here may include at least one of encoding, quantization, dequantization, or decoding, etc.

Correspondingly, the network device receives the processing information and inputs the processing information into its own AI model (of course, the AI model may be referred to as a "decoder or a CSI recovery model, etc.") for decoding, to recover the channel information/CSI information as much as possible. Herein, in this embodiment, the information output by the AI model of the network device may be referred to as "output information".

In this way, the CSI compression and CSI recovery processes are implemented through the AI model of the terminal device and the AI model of the network device.

It should be noted that since CSI compression and CSI recovery are two coexisting processes, the AI model of the terminal device and the AI model of the network device need to appear in a pair. In this way, the AI model of the terminal device and the AI model of the network device may be referred to as an "AI model pair" or a "two-sided AI model". Herein, for ease of description, in this embodiment, the AI model used for CSI compression in the two-sided AI model may be referred to as a "first AI model", and the AI model used for CSI recovery in the two-sided AI model may be referred to as a "second AI model".

For example, taking the two-sided AI model including an encoder and a decoder as an example, as shown in FIG. 3. In FIG. 3, for the terminal device side, CSI compression is performed on input information *V* through an encoder 311 to obtain processing information *V_{E}* , and then quantization is performed on the processing information *V_{E}* through a quantizer 312 to obtain quantized processing information *V_{Q}*. For the network device side, dequantization is performed on the quantized processing information *V_{Q}* first through a dequantizer 321, and then CSI recovery is performed through a decoder 322 to obtain output information *Ṽ*.

Different from the traditional CSI compression and CSI recovery processes, in order to improve the accuracy of CSI compression and CSI recovery, and to save air interface overhead, this embodiment needs to consider enhancing CSI compression and CSI recovery.

For the enhancement of CSI compression, this embodiment considers that the AI model of the terminal device may use first past/historical information to participate in CSI compression of current input information. Herein, the first historical information may include at least one of historical input information, historical processing information, or historical compression intermediate information.

The historical input information may be defined according to an arrangement order of input information, or defined according to an order in which the first AI model processes input information, or defined according to a chronological order in which input information is generated, or defined according to an order in which input information is input into the first AI model, etc.

For the definition according to the arrangement order of input information, input information arranged before the current input information may be referred to as "historical input information".

For the definition according to the order in which the first AI model processes input information, when the first AI model is processing the current input information, input information processed before the current input information may be referred to as "historical input information".

For the definition according to the chronological order in which input information is generated, input information generated before the current input information may be referred to as "historical input information".

For the definition according to the order in which input information is input into the first AI model, input information input into the first AI model before the current input information may be referred to as "historical input information".

The historical processing information may be information appearing in the process from inputting the historical input information to outputting the historical output information by the two-sided AI model, or information obtained by inputting the historical input information into the first AI model, or information obtained by further processing information obtained by inputting the historical input information into the first AI model.

The historical compression intermediate information may be information generated in the process of compressing the historical input information by the two-sided AI model/first AI model.

It can be understood that when the first historical information is introduced into CSI compression, since the first historical information and the current input information may reflect a time-domain change or time-domain correlation of a channel, the first AI model may consider the time-domain change or time-domain correlation of the channel when performing CSI compression on the current input information, thereby facilitating improving the accuracy of CSI compression, improving the performance of CSI compression, and achieving the enhancement of CSI compression.

For the enhancement of CSI recovery, this embodiment considers that the AI model of the network device may use second historical information to participate in CSI recovery of current output information. Herein, the second historical information may include at least one of historical output information, historical processing information, or historical recovery intermediate information.

The historical output information may be defined according to an arrangement order of output information, or defined according to an order in which the second AI model outputs output information, or defined according to a chronological order in which output information is generated, or output information corresponding to the historical input information, etc. It should be noted that understanding of various definitions of the historical output information may refer to the relevant description of the historical input information mentioned above, which will not be repeated here.

The historical recovery intermediate information may be information generated in the process of recovering the historical output information by the second AI model.

It can be understood that when the second historical information is introduced into CSI recovery, since the second historical information and the current output information may reflect a time-domain change or time-domain correlation of a channel, the second AI model may consider the time-domain change or time-domain correlation of the channel when performing CSI recovery on the current processing information, thereby facilitating improving the accuracy of CSI recovery, improving the performance of CSI recovery, and achieving the enhancement of CSI recovery.

In the enhancement of CSI compression and CSI recovery, the AI model of the terminal device and the AI model of the network device may be referred to as an "enhanced AI model pair" or an "enhanced two-sided AI model". Herein, for ease of description, in this embodiment, an AI model used for CSI compression in the enhanced two-sided AI model may also be referred to as the "first AI model", and an AI model used for CSI recovery in the enhanced two-sided AI model may also be referred to as the "second AI model".

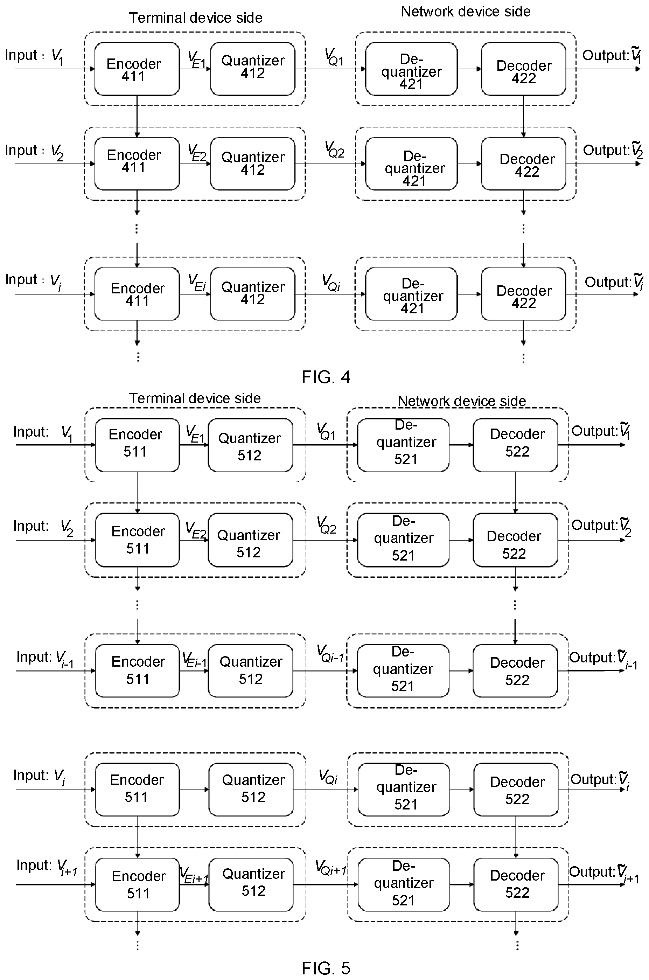

For example, it is taken an example that the enhanced two-sided AI model includes an encoder, a quantizer, a dequantizer, and a decoder, as shown in FIG. 4. In FIG. 4, for the terminal device side, when input information *V*₁ is input into an encoder 411, the encoder 411 performs CSI compression on the input information *V*₁ to obtain processing information *V*_{*E*1}, and a quantizer 412 performs quantization on the processing information *V*_{*E*1} to obtain quantized processing information *V*_{*Q*1}. In addition, the input information *V*₁ may be stored as historical input information, the processing information *V*_{*E*1} and/or the quantized processing information *V*_{*Q*1} may be stored as historical processing information, and information generated in the process of compressing the input information *V*₁ may be stored as historical compression intermediate information. For the network device side, dequantization is performed on the quantized processing information *V*_{*Q*1} first through a dequantizer 421, and then CSI recovery is performed through a decoder 422 to obtain output information *Ṽ*₁. In addition, the output information *Ṽ*₁ may be stored as historical output information, and information generated in the process of recovering the output information *Ṽ*₁ may be stored as historical recovery intermediate information.

In FIG. 4, for the terminal device side, when input information *V*₂ is input into the encoder 411, the encoder 411 may use the first historical information to perform CSI compression on the input information *V*₂ to obtain processing information *V*_{*E*2} , and the quantizer 412 performs quantization on the processing information *V*_{*E*2} to obtain quantized processing information *V*_{*Q*2} . In addition, the input information *V*₂ may be stored as historical input information, the processing information *V*_{*E*2} and/or the quantized processing information *V*_{*Q*2} may be stored as historical processing information, and information generated in the process of compressing the input information *V*₂ may be stored as historical compression intermediate information. For the network device side, dequantization is performed on the quantized processing information *V*_{*Q*2} first through the dequantizer 421, and then CSI recovery is performed through the decoder 422 to obtain output information *Ṽ*₂. In addition, the output information *Ṽ*₂ may be stored as historical output information, and information generated in the process of recovering the output information *Ṽ*₂ may be stored as historical recovery intermediate information.

In FIG. 4, for the terminal device side, when input information *Vᵢ*(*i* = 2,3,...) is input into the encoder 411, the encoder 411 may use the first historical information to perform CSI compression on the input information *Vᵢ* to obtain processing information *V_{Ei}*, and the quantizer 412 performs quantization on the processing information *V_{Ei}* to obtain quantized processing information *V_{Qi}*. In addition, the input information *Vᵢ* may be stored as historical input information, the processing information *V_{Ei}* and/or the quantized processing information *V_{Qi}* may be stored as historical processing information, and information generated in the process of compressing the input information *Vᵢ* may be stored as historical compression intermediate information. For the network device side, dequantization is performed on the quantized processing information *V_{Qi}* first through the dequantizer 421, and then CSI recovery is performed through the decoder 422 to obtain output information *Ṽᵢ*. In addition, the output information *Ṽᵢ* can be stored as historical output information, and information generated in the process of recovering the output information *Ṽᵢ* may be stored as historical recovery intermediate information.

It should be noted that, in terms of temporal domain, spatial domain, and frequency domain, the traditional two-sided AI model may be used for CSI compression and CSI recovery in the spatial-frequency (SF) domain, and the AI model in the traditional two-sided AI model may be referred to as a "spatial-frequency (SF) domain AI model"; the enhanced two-sided AI model may be used for CSI compression and CSI recovery in the temporal-spatial-frequency (TSF) domain, and the AI model in the enhanced two-sided AI model may be referred to as a "temporal-spatial-frequency (TSF) domain AI model". Of course, the traditional two-sided AI model and the enhanced two-sided AI model may also be described as other terms, which are not specifically limited thereto.

### [Input information]

The input information of the enhanced two-sided first AI model may refer to information input into the enhanced two-sided first AI model.

Regarding the input information of the enhanced two-sided AI model, the input information involves concepts such as "historical input information", "initial input information", "non-initial input information", and "current input information", etc.

The historical input information may be defined according to an arrangement order of input information, or defined according to an order in which the first AI model processes input information, or defined according to a chronological order in which input information is generated, or defined according to an order in which input information is input into the first AI model, etc. For example, in FIG. 4, when the input information *V*₂ is input into the encoder 411 at a current moment, since the information *V*₁ has been input into the encoder 411 before the information *V*₂ is input, the input information *V*₁ may be regarded as historical input information.

The initial input information may refer to information that is initially/firstly input into the first AI model for CSI compression within a certain time range. Since it is the information that is initially/firstly input, no first historical information has been stored, and CSI compression can only be directly performed on the initial input information. For example, the input information *V*₁ in FIG. 4 may be regarded as the initial input information.

The non-initial input information may refer to information that is not initially/firstly input into the first AI model for CSI compression within a certain time range, or refer to information input into the first AI model for CSI compression after the initial input information. In this case, since the first historical information has been stored, the first AI model may use the first historical information to perform CSI compression on the non-initial input information. For example, the input information *V*₂ and the input information *Vᵢ* in FIG. 4 may be regarded as non-initial input information. Meanwhile, when performing CSI processing on the non-initial input information, the initial input information may be regarded as the historical input information, and the processing information corresponding to the initial input information may be regarded as historical processing information. In addition, previous non-initial input information may be regarded as historical input information of next non-initial input information, and the processing information corresponding to the previous non-initial input information may be regarded as historical processing information of the next non-initial input information.

The current input information may refer to input information at a current moment/specific moment, or may refer to input information input into the first AI model at a current moment/specific moment, etc.

To sum up, the first AI model may be used to perform CSI compression on the initial input information, and perform CSI compression on the non-initial input information by using the first historical information.

### [Output information]

The output information of the enhanced two-sided AI model may be information output by the second AI model, and the output information corresponds one-to-one with the input information.

Regarding the output information of the enhanced two-sided AI model, the output information involves concepts such as "historical output information", "initial output information", and "non-initial output information", etc.

The historical output information may be defined according to an arrangement order of output information, or defined according to an order in which the second AI model outputs output information, or defined according to a chronological order in which output information is generated, or output information corresponding to the historical input information, etc. For example, in FIG. 4, when the input information *V*₂ is input into the encoder 411 at a current moment, since the information *V*₁ has been input into the encoder 411 before the information *V*₂ is input, the input information *V*₁ may be regarded as historical input information, and the output information *Ṽ*₁ may be regarded as historical output information.

The initial output information may refer to information that is initially/firstly output by the second AI model within a certain time range. Since it is the information that is initially/firstly output, no second historical information has been stored. For example, the output information *Ṽ*₁ in FIG. 4 may be regarded as the initial output information.

The non-initial output information may refer to information that is not initially/firstly output by the second AI model within a certain time range, or refer to information output by the second AI model after the initial output information, or refer to output information corresponding to non-initial input information. In this case, since the second historical information has been stored, the second AI model may use the second historical information to participate in the CSI recovery of the non-initial output information. For example, the output information *Ṽ*₂ and the output information *Ṽᵢ* in FIG. 4 may be regarded as non-initial output information. Meanwhile, for the CSI recovery process of the non-initial output information, the initial output information may be regarded as historical output information. In addition, previous non-initial output information may be regarded as historical output information of next non-initial output information.

To sum up, the second AI model may be used for CSI recovery of the initial output information, and participate in the CSI recovery of the non-initial output information by using the second historical information.

### [Differentiation of input information]

From the content in the above "CSI-related configuration", it can be known that the CSI resource configuration is used for a configuration of a measurement resource, the CSI report configuration is used for a configuration of a CSI report, and the CSI report is associated with a certain measurement resource. Therefore, in the enhanced CSI measurement and CSI reporting, the terminal device may perform channel measurement/interference measurement according to a measurement resource associated with the CSI report to obtain channel information/CSI information, and then input the channel information/CSI information into the enhanced two-sided AI model for CSI compression, and the information input into the AI model of the terminal device is referred to as "input information".

The CSI report and the measurement resource associated with the CSI report are two different concepts, and this embodiment may adopt one of the CSI report or the measurement resource to define the input information, and which one to use specifically may be determined by a network configuration, autonomous determination by the terminal device, or a protocol specification, etc., which is not specifically limited thereto. When the CSI report is adopted to define the input information, the input information in this embodiment may be channel information/CSI information corresponding to the CSI report. When the measurement resource is adopted to define the input information, the input information in this embodiment may be channel information/CSI information corresponding to the measurement resource.

For the input information corresponding to the CSI report, when the network configures multiple CSI reports, this embodiment may distinguish different input information according to differences of these CSI reports. For example, when the network device triggers multiple aperiodic CSI reports through one DCI, the terminal device may perform CSI measurement according to measurement resources associated with these aperiodic CSI reports to obtain input information corresponding to each of these aperiodic CSI reports.

Optionally, for distinguishing different input information according to differences of the CSI reports, this embodiment may distinguish different input information according to differences of time domain positions (such as uplink slots in which the CSI reports are located) of the CSI reports, or distinguish different input information according to differences of IDs/indices of the CSI reports.

Optionally, since the CSI report includes a periodic CSI report, an aperiodic CSI report, and a semi-persistent CSI report, the input information corresponding to the CSI report may include at least one of input information corresponding to the periodic CSI report, input information corresponding to the aperiodic CSI report, or input information corresponding to the semi-persistent CSI report, and which one specifically may be determined according to the time domain behavior of the CSI report configured/indicated by the network.

For example, the terminal device may perform CSI measurement according to a measurement resource associated with the periodic CSI report to obtain input information corresponding to the periodic CSI report, so as to group the input information corresponding to the periodic CSI report.

For the input information corresponding to the measurement resource, when the network configures multiple measurement resources and the multiple measurement resources are associated with at least one CSI report, this embodiment may distinguish different input information according to differences of the measurement resources.

Optionally, for distinguishing different input information according to differences of the measurement resources, this embodiment may distinguish different input information according to differences of time domain positions of the measurement resources, or distinguish different input information according to differences of IDs/indices of the measurement resources.

Optionally, since the measurement resource includes a periodic measurement resource, an aperiodic measurement resource, and a semi-persistent measurement resource, the input information corresponding to the measurement resource may include at least one of input information corresponding to the periodic measurement resource, input information corresponding to the aperiodic measurement resource, or input information corresponding to the semi-persistent measurement resource, and which one specifically may be determined according to the time domain behavior of the measurement resource configured/indicated by the network.

### [Input order of input information and output order of output information]

It should be noted that in the enhanced CSI compression and CSI recovery processes, the enhanced two-sided AI model will perform CSI compression on the input information in order. In addition, since the input information corresponds one-to-one with the output information, the input order of the input information corresponds one-to-one with the output order of the output information.

Optionally, the input information corresponding to the CSI report may be input into the enhanced two-sided AI model according to an order of time domain positions (such as uplink slots in which the CSI reports are located) of CSI reports. That is, input information corresponding to a CSI report with a preceding time domain position will be input into the enhanced two-sided AI model earlier/firstly for CSI compression and CSI recovery, and input information corresponding to a CSI report with a later/subsequent time domain position will be input into the enhanced two-sided AI model later/subsequently for CSI recovery and CSI compression.

In this way, input information corresponding to a first CSI report may refer to input information corresponding to a CSI report with a foremost time domain position, input information corresponding to a second CSI report may refer to input information after the input information corresponding to the first CSI report, and so on.

Optionally, the input information corresponding to the CSI report may be input into the enhanced two-sided AI model according to a magnitude order of IDs/indices of CSI reports. For example, the input information corresponding to a CSI report with a smaller ID/index will be input into the enhanced two-sided AI model earlier/firstly for CSI compression and CSI recovery, while the input information corresponding to a CSI report with a larger ID/index will be input into the enhanced two-sided AI model later/subsequently for CSI recovery and CSI compression.

In this way, the input information corresponding to the first CSI report may refer to the input information corresponding to the CSI report with a smaller ID/index, the input information corresponding to the second CSI report may refer to the input information after the input information corresponding to the first CSI report, and so on.

Optionally, the input information corresponding to the measurement resource may be input into the enhanced two-sided AI model according to an order of time domain positions of measurement resources. That is, input information corresponding to a measurement resource with a preceding/foremost time domain position will be input into the enhanced two-sided AI model earlier/firstly for CSI compression and CSI recovery, and input information corresponding to a measurement resource with a later/subsequent time domain position will be input into the enhanced two-sided AI model later/subsequently for CSI recovery and CSI compression.

In this way, input information corresponding to a first measurement resource may refer to input information corresponding to a measurement resource with a foremost time domain position, input information corresponding to a second measurement resource may refer to input information after the input information corresponding to the first measurement resource, and so on.

Optionally, the input information corresponding to the measurement resource may be input into the enhanced two-sided AI model according to a magnitude order of IDs/indices of measurement resources. For example, input information corresponding to a measurement resource with a smaller ID/index will be input into the enhanced two-sided AI model earlier/firstly for CSI compression and CSI recovery, and input information corresponding to a measurement resource with a larger ID/index will be input into the enhanced two-sided AI model later/subsequently for CSI recovery and CSI compression.

In this way, input information corresponding to a first measurement resource may refer to input information corresponding to a measurement resource with a smaller ID/index, input information corresponding to a second measurement resource may refer to input information after the input information corresponding to the first measurement resource, and so on.

Combined with the above content, this embodiment will specifically describe the enhancement of CSI-related processing through the following solutions below. Herein, these solutions may be associated with or independent of each other, and the same content between different solutions may be cross-referenced, which will not be repeated.

### [Solution 1]

In the enhanced CSI compression and CSI recovery processes, since the two-sided AI model will perform CSI compression on input information in order, and historical input information may participate in CSI compression of current input information, previously obtained processing information may be used as historical processing information to participate in the CSI compression of the current input information, and/or previously obtained compression intermediate information may be used as historical compression intermediate information to participate in the CSI compression of the current input information.

Based on this, in "Solution 1", this embodiment considers grouping the input information. Herein, the purpose of grouping is that: historical input information within a group may participate in CSI compression of non-initial input information within the same group, and all input information in a group does not participate in CSI compression of any input information in other groups.

For example, taking the input information being divided into two groups as an example, CSI compression is directly performed on initial input information in a first group, and historical input information in the first group only participates in CSI compression of non-initial input information within the group, but does not participate in CSI compression of any input information in a second group; CSI compression is directly performed on initial input information in the second group, and historical input information in the second group only participates in CSI compression of non-initial input information within the group.

In this way, the enhanced two-sided AI model may be used to perform CSI compression on initial input information within a group, and perform CSI compression on non-initial input information within the group by using historical input information within the group.

For example, when grouping the input information in FIG. 4, if the input information *V*₁ to the input information *V*_{*i*-1} are divided into a same group, and the input information after the input information *V*_{*i*-1} is divided into another group, a time order in which an encoder 511, a quantizer 512, a dequantizer 521, and a decoder 522 in the enhanced two-sided AI model sequentially process information is shown in FIG. 5.

Optionally, a group may have a group length. Herein, the group length may be a maximum number of input information within the group.

Optionally, the group length may be finite or infinite, which may be specifically configured by a network or specified by a protocol.

It should be noted that when the length of the group is finite, this embodiment may determine one or more groups according to the length of the group, that is, all input information may be in one or more groups; when the length of the group is infinite, it is generally considered that there may only be a group, that is, all input information is in a group. In addition, when the length of the group is finite, this indicates that there is an exact maximum number of input information; when the length of the group is finite, it is generally considered that the maximum number of input information is infinite.

Optionally, group lengths of different groups may be different or the same.

It should be noted that a group may have an identity (ID) or an index, so as to distinguish different groups through identities/indices. In addition, group lengths of different groups may be different or the same. When the network configures the group length, the network may flexibly configure different group lengths for different groups, so as to improve the flexibility of the group length configuration; or the network only needs to configure a same group length for different groups through a configuration, so as to save signaling overhead required for the configuration.

Combined with the content in the above "Differentiation of input information", this embodiment may group the input information corresponding to the CSI reports or group the input information corresponding to the measurement resources.

The input information corresponding to the CSI report may be only input information corresponding to a periodic CSI report, or only input information corresponding to an aperiodic CSI report, or only input information corresponding to a semi-persistent CSI report, or a combination of the input information corresponding to the periodic CSI report, the input information corresponding to the aperiodic CSI report and/or the input information corresponding to the semi-persistent CSI report, etc., and which one specifically may be determined according to the time domain behavior of the CSI report configured/indicated by the network.

The input information corresponding to the measurement resource may be only input information corresponding to a periodic measurement resource, or only input information corresponding to an aperiodic measurement resource, or only input information corresponding to a semi-persistent measurement resource, or a combination of the input information corresponding to the periodic measurement resource, the input information corresponding to the aperiodic measurement resource and/or the input information corresponding to the semi-persistent measurement resource, etc., and which one specifically may be determined according to the time domain behavior of the measurement resource configured/indicated by the network.

For example, taking the input information being defined by the CSI report as an example, the terminal device performs CSI measurement according to the measurement resource associated with the periodic CSI report to obtain input information corresponding to the periodic CSI report, so as to group the input information corresponding to the periodic CSI report.

For another example, taking the input information being defined by the CSI report as an example, the terminal device performs CSI measurement according to the measurement resource associated with the semi-persistent CSI report to obtain input information corresponding to the semi-persistent CSI report, so as to group the input information corresponding to the semi-persistent CSI report.

For another example, taking the input information being defined by the CSI report as an example, the terminal device performs CSI measurement according to measurement resources associated with multiple aperiodic CSI reports triggered by one DCI, to obtain input information corresponding to each aperiodic CSI report, so as to group the input information corresponding to the aperiodic CSI report.

For another example, taking the input information being defined by the CSI report as an example, the terminal device performs CSI measurement according to measurement resources respectively associated with the periodic CSI report, the semi-persistent CSI report, and the aperiodic CSI report, to obtain the respective corresponding input information. In this case, this embodiment may group the input information corresponding to the periodic CSI report, the input information corresponding to the semi-persistent CSI report, and the input information corresponding to the aperiodic CSI report together, or group them separately, which may be specifically configured by the network, autonomously determined by the terminal device, or specified by a protocol, etc., which is not specifically limited thereto.

In addition, after grouping the input information, since CSI compression and CSI recovery coexist, and CSI compression needs to be performed sequentially on the input information in a group in order, and the processing information needs to be used for CSI recovery in sequence, the terminal device, after performing CSI compression on certain input information in a group to obtain processing information, may need to report to the network device a position of the input information in the group or a position of the processing information in the group.

In this way, when the network device knows the position of the input information in the group or the position of the processing information in the group, the network device may determine an order of the processing information in CSI recovery according to the position of the input information or the position of the processing information in the group.

It is worth noting that this embodiment mainly describes the grouping of the input information, but since the input information, the processing information, and the output information correspond one-to-one with each other. Therefore, the grouping of the input information may also be the grouping of the processing information or the grouping of the output information, and the content about the grouping of the input information may be adapted to the grouping of the processing information or the grouping of the output information, which will not be repeated.

Below, this embodiment specifically describes how to determine the grouping of the input information through the following methods. Herein, these methods may be associated with or independent of each other, and the same content between different methods may be cross-referenced, which will not be repeated.

### "Method 1"

In "Method 1", this embodiment may introduce a time window.

Herein, if time domain positions of at least one CSI report are within the time window, input information corresponding to the at least one CSI report belongs to a same group; or, if time domain positions of at least one measurement resource or time domain positions of CSI reports associated with the at least one measurement resource are within the time window, input information corresponding to the at least one measurement resource belongs to a same group.

In this way, grouping of the input information is implemented by the time window.

Of course, the time window may be described in other terms, such as a window, a time period, or a duration, etc., which is not specifically limited thereto. Optionally, a length of the time window is configured by the network. For example, the network device may configure the length of the time window to the terminal device via higher layer signaling (such as RRC signaling, MAC signaling) or DCI.

Optionally, for a periodic CSI report or a semi-persistent CSI report, the length of the time window may be an integer multiple of a CSI report period. In this way, time domain positions of multiple periodic CSI reports or multiple semi-persistent CSI reports may be within a time window.

Optionally, for a periodic CSI report or a CSI report carried on a PUCCH, a starting position of the time window satisfies the following: $\left({N}_{slot}^{frame , μ}{n}_{f}+{n}_{s , f}^{μ}-{T}_{offset}\right) mod \left(N∗{T}_{CSI}\right) = 0 ;$ where *µ* represents a subcarrier spacing configuration of an uplink bandwidth part (UL BWP) transmitting the CSI report; ${N}_{slot}^{frame , μ}$ represents a number of slots in a frame under the subcarrier spacing configuration *µ*; *n_{f}* represents a system frame number in which the CSI report is located; ${n}_{s , f}^{μ}$ represents a slot number in which the CSI report is located; *T_{offset}* represents a slot offset; *N* represents a maximum number of input information within a group; and *T_{CSI}* represents a CSI report period.

Optionally, for a CSI report carried on a PUSCH, a starting position of the time window satisfies the following: $\left({N}_{slot}^{frame , μ}\left({n}_{f}-{n}_{f}^{start}\right)+{n}_{s , f}^{μ}-{n}_{s , f}^{start}\right) mod \left(N∗{T}_{CSI}\right) = 0 ;$ where ${n}_{f}^{start}$ represents a system frame number in which a PUSCH sending an initial CSI report after activation of DCI is located; and ${n}_{s , f}^{start}$ represents a slot number in which a PUSCH sending an initial CSI report after activation of DCI is located.

Optionally, the starting position of the time window is configured by the network. For example, the network device may configure an offset to the terminal device via higher layer signaling (such as RRC signaling, MAC signaling) or DCI, and the offset may be used to determine the starting position of the time window.

Optionally, the time window is periodic, and the period of the time window is configured by the network. For example, the network device may configure the period of the time window to the terminal device via higher layer signaling (such as RRC signaling, MAC signaling) or DCI.

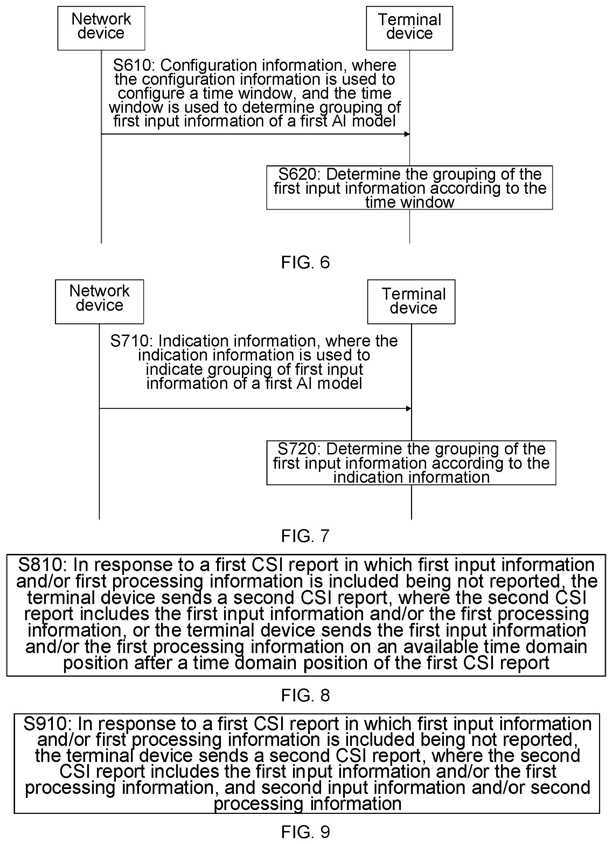

Below, taking interaction between a network device and a terminal device as an example, "Method 1" is exemplarily illustrated. As shown in FIG. 6, FIG. 6 is a flow schematic diagram of a communication method in the embodiments of the present disclosure. Herein, the method includes the following steps.

S610: The network device sends configuration information, where the configuration information is used to configure a time window, and the time window is used to determine grouping of first input information of a first AI model.

Correspondingly, the terminal device receives the configuration information.

It can be seen that in this embodiment, the network configures the time window by the configuration information.

It should be noted that regarding the first input information, this embodiment further involves first processing information and first output information. Herein, the first processing information is information obtained by inputting the first input information into the first AI model or information obtained by further processing information obtained by inputting the first input information into the first AI model; the first output information is information obtained by inputting the first processing information into the first AI model or information obtained by further processing information obtained by inputting the first processing information into the first AI model.

It is worth noting that "Method 1" mainly describes the grouping of the first input information. However, since the first input information, the first processing information, and the first output information correspond one-to-one with each other, the grouping of the first input information may also be regarded as the grouping of the first processing information or the grouping of the first output information. Meanwhile, the content about the grouping of the first input information may be adapted to the grouping of the first processing information or the grouping of the first output information, which will not be repeated.

Optionally, the "first AI model" here refers to an AI model used for CSI compression in the enhanced two-sided AI model.

Optionally, the configuration information includes at least one of length information, starting information, or period information.

The length information is used to configure a length of the time window, and/or used to configure a group length of the input information.

The starting information is used to configure a starting position of the time window.

The period information is used to configure a period of the time window.

Optionally, the length of the time window is an integer multiple of a CSI report period.

Optionally, the starting position of the time window satisfies the following: $\left({N}_{slot}^{frame , μ}{n}_{f}+{n}_{s , f}^{μ}-{T}_{offset}\right) mod \left(N∗{T}_{CSI}\right) = 0 ;$ or, $\left({N}_{slot}^{frame , μ}\left({n}_{f}-{n}_{f}^{start}\right)+{n}_{s , f}^{μ}-{n}_{s , f}^{start}\right) mod \left(N∗{T}_{CSI}\right) = 0 .$

Optionally, the configuration information is carried by functionality identification information or model identification information.

Optionally, the configuration information is carried by higher layer signaling (such as RRC signaling or MAC signaling) or DCI.

Optionally, the first input information is among input information corresponding to at least one CSI report, and a time domain behavior of the at least one CSI report is at least one of periodic, semi-persistent, or aperiodic.

It can be understood that the input information corresponding to the at least one CSI report includes at least one of input information corresponding to a periodic CSI report, input information corresponding to a semi-persistent CSI report, or input information corresponding to an aperiodic CSI report. Meanwhile, the first input information may be input information corresponding to a periodic CSI report, input information corresponding to a semi-persistent CSI report, or input information corresponding to an aperiodic CSI report.

Optionally, the first input information may be initial input information and/or non-initial input information, among the input information corresponding to the at least one CSI report.

Optionally, the input information corresponding to the at least one CSI report is input into the first AI model according to an order of time domain positions of CSI reports or a magnitude order of IDs/indices of CSI reports.

Optionally, the at least one CSI report includes all aperiodic CSI reports triggered by one DCI.

It can be understood that the input information corresponding to the at least one CSI report includes input information corresponding to all aperiodic CSI reports triggered by one DCI.

Optionally, the first input information is among the input information corresponding to at least one measurement resource, and a time domain behavior of the at least one measurement resource is at least one of periodic, semi-persistent, or aperiodic.

It can be understood that the input information corresponding to the at least one measurement resource includes at least one of input information corresponding to a periodic measurement resource, input information corresponding to a semi-persistent measurement resource, or input information corresponding to an aperiodic CSI report. Meanwhile, the first input information may be input information corresponding to a periodic CSI report, input information corresponding to a semi-persistent CSI report, or input information corresponding to an aperiodic CSI report.

Optionally, the first input information may be initial input information and/or non-initial input information among the input information corresponding to the at least one measurement resource.

Optionally, the input information corresponding to the at least one measurement resource is input into the first AI model according to an order of time domain positions of measurement resources or a magnitude order of IDs/indices of measurement resources.

S620: the terminal device determines grouping of the first input information according to the time window.

Optionally, if the first input information is among input information corresponding to at least one CSI report, and time domain positions of the at least one CSI report are within the time window, the input information corresponding to the at least one CSI report belongs to a same group.

In this way, for the group to which the input information corresponding to the at least one CSI report belongs, when the first input information is the initial input information in the group, the first AI model may directly perform CSI compression on the first input information; when the first input information is non-initial input information in the group, the first AI model may perform CSI compression on the first input information by using historical input information in the group.

Optionally, if the first input information is among the input information corresponding to at least one measurement resource, and time domain positions of the at least one measurement resource are within the time window or time domain positions of CSI reports associated with the at least one measurement resource are within the time window, the input information corresponding to the at least one measurement resource belongs to a same grouping.

In this way, for the group to which the input information corresponding to the at least one measurement resource belongs, when the first input information is the initial input information in the group, the first AI model may directly perform CSI compression on the first input information; when the first input information is non-initial input information in the group, the first AI model may perform CSI compression on the first input information by using historical input information in the group.

Optionally, after S620, the method may further include:
sending, by the terminal device, first position information, where the first position information is used to indicate a position of the first input information in the group or a position of the first processing information in the group.

Correspondingly, the network device receives the first position information.

It can be seen that since CSI compression and CSI recovery coexist, and CSI compression needs to be sequentially performed on the input information in a group in order to obtain processing information, and CSI recovery needs to be sequentially performed on the processing information in order, after performing CSI compression on the first input information to obtain the first processing information, the terminal device reports the position of the first input information in the group or the position of the first processing information in the group to the network device, through the first position information. In this way, the network device may know the order of the first processing information in the CSI recovery process according to the position of the first input information in the group or the position of the first processing information in the group, so as to perform CSI recovery on the first processing information in order.

Optionally, the first position information is carried by at least one of a CSI report, higher layer signaling (such as RRC signaling or MAC signaling), or UCI.

### "Method 2"

In "Method 2", this embodiment may configure/indicate grouping of the input information via higher layer signaling (such as RRC signaling or MAC signaling), DCI, etc.

For example, the network device may configure/indicate a group ID associated with a CSI report via higher layer signaling (such as RRC signaling or MAC signaling), DCI, etc. In this way, the input information corresponding to the CSI report is associated with the group ID, and input information corresponding to CSI reports associated with the same group ID is divided into a group.

For another example, the network device may configure/indicate a group ID associated with a measurement resource via higher layer signaling (such as RRC signaling or MAC signaling), DCI, etc. In this way, the input information corresponding to the measurement resource is associated with the group ID, and input information corresponding to measurement resources associated with the same group ID is divided into a group.

Below, taking interaction between a network device and a terminal device as an example, "Method 2" is exemplarily illustrated. As shown in FIG. 7, FIG. 7 is a flow schematic diagram of another communication method in the embodiments of the present disclosure. Herein, the method includes the following steps.

S710: The network device sends indication information, where the indication information is used to indicate grouping of first input information of a first AI model.

Correspondingly, the terminal device receives the indication information.

S720: The terminal device determines grouping of the first input information according to the indication information.

It can be seen that in this embodiment, the network indicates the grouping of the input information by the indication information.

Optionally, the "first AI model" here refers to an AI model used for CSI compression in the enhanced two-sided AI model.

Optionally, the indication information is carried by functionality identification information or model identification information.

Optionally, the indication information is carried by higher layer signaling (such as RRC signaling or MAC signaling) or DCI.

Optionally, the first input information is among input information corresponding to at least one CSI report, and a time domain behavior of the at least one CSI report is at least one of periodic, semi-persistent, or aperiodic.

It can be understood that the input information corresponding to the at least one CSI report includes at least one of input information corresponding to a periodic CSI report, input information corresponding to a semi-persistent CSI report, or input information corresponding to an aperiodic CSI report. Meanwhile, the first input information may be input information corresponding to a periodic CSI report, input information corresponding to a semi-persistent CSI report, or input information corresponding to an aperiodic CSI report.

Optionally, the first input information may be initial input information or non-initial input information, among the input information corresponding to the at least one CSI report.

Optionally, the input information corresponding to the at least one CSI report is input into the first AI model according to an order of time domain positions of CSI reports or a magnitude order of IDs/indices of CSI reports.

Optionally, the at least one CSI report includes all aperiodic CSI reports triggered by one DCI.

It can be understood that the input information corresponding to the at least one CSI report includes input information corresponding to all aperiodic CSI reports triggered by one DCI.

Optionally, the first input information is among input information corresponding to at least one measurement resource, and a time domain behavior of the at least one measurement resource is at least one of periodic, semi-persistent, or aperiodic.

It can be understood that the input information corresponding to the at least one measurement resource includes at least one of input information corresponding to a periodic measurement resource, input information corresponding to a semi-persistent measurement resource, or input information corresponding to an aperiodic CSI report. Meanwhile, the first input information may be input information corresponding to a periodic CSI report, input information corresponding to a semi-persistent CSI report, or input information corresponding to an aperiodic CSI report.

Optionally, the first input information may be initial input information or non-initial input information, among the input information corresponding to the at least one measurement resource.

Optionally, the input information corresponding to the at least one measurement resource is input into the first AI model according to an order of time domain positions of measurement resources or a magnitude order of IDs/indices of measurement resources.

Optionally, after S720, the method may further include:
sending, by the terminal device, first position information, where the first position information is used to indicate a position of the first input information in the group or a position of the first processing information in the group.

Correspondingly, the network device receives the first position information.

It can be seen that since CSI compression and CSI recovery coexist, and CSI compression needs to be sequentially performed on the input information in a group in order to obtain processing information, and CSI recovery needs to be sequentially performed on the processing information in order, after performing CSI compression on the first input information to obtain the first processing information, the terminal device reports the position of the first input information in the group or the position of the first processing information in the group to the network device, through the first position information. In this way, the network device may know the order of the first processing information in the CSI recovery process according to the position of the first input information in the group or the position of the first processing information in the group, so as to perform CSI recovery on the first processing information in order.

### [Solution 2]

In the enhanced CSI compression and CSI recovery processes, the terminal device may need to report/feed back input information and/or processing information. However, some input information and/or processing information that should have been reported/fed back may not be reported due to some factors, resulting in a possible dropping/omission problem of the input information and/or processing information.

For example, when considering that uplink resources are finite, the input information and/or processing information that should have been reported may fail to be reported due to insufficient uplink resources.

Based on this, in "Solution 2", this embodiment needs to determine how the CSI reporting is performed on the input information and/or processing information that should have been reported but is not reported, which may be specifically configured by the network, autonomously determined by the terminal device, or specified by a protocol, etc., which is not specifically limited thereto.

Optionally, the terminal device may continue to report/postpone reporting of the input information and/or processing information that should have been reported but is not reported. It can be understood that when the input information and/or processing information that should have been reported fails to be reported at a current moment/in a current CSI reporting process, the terminal device may report the input information and/or processing information at a subsequent moment/in a subsequent CSI reporting process. For example, the input information and/or processing information is carried by a subsequent CSI report.

Optionally, the terminal device may no longer report the input information and/or processing information that should have been reported but is not reported. It can be understood that when the input information and/or processing information that should have been reported fails to be reported at a current moment/in a current CSI reporting process, the terminal device will no longer report the input information and/or processing information at a subsequent moment/in a subsequent CSI reporting process.

It should be noted that the input information discussed in "Solution 2" may be grouped according to the above "Solution 1", or may not be grouped, which is not specifically limited thereto.

Below, this embodiment specifically describes how to determine the reporting of the input information and/or processing information that should have been reported but is not reported, through the following methods. Herein, these methods may be associated with or independent of each other, and the same content between different methods may be cross-referenced, which will not be repeated.

### "Method 1"

Since the traditional two-sided AI model/enhanced two-sided AI model needs to use input information and/or processing information to perform CSI recovery, for the input information and/or processing information that should have been reported but is not reported, the network device cannot perform CSI recovery due to failure to receive the input information and/or processing information. In addition, in the traditional two-sided AI model/enhanced two-sided AI model, CSI recovery needs be performed on different information in order. For example, in FIG. 4, the quantized processing information *V*_{*Q*1} needs to be sequentially input into the dequantizer 421 and the decoder 422 for CSI recovery to obtain output information *Ṽ*₁, and then the quantized processing information *V*_{*Q*2} is sequentially input into the dequantizer 421 and the decoder 422 for CSI recovery to obtain output information *Ṽ*₂.

Based on this, in "Method 1", the terminal device may continue to report/postpone reporting of the input information and/or processing information that should have been reported but is not reported.

In this way, continued reporting of the input information and/or current processing information that should have been reported but is not reported is implemented by continuing to report/postponing reporting, thereby avoiding the inability to perform CSI recovery on this part of information and subsequent information due to the network device being unable to receive the input information and/or processing information.

Optionally, in response to a current CSI report in which the input information and/or processing information that should have been reported is included being not to be reported, the terminal device may carry the input information and/or processing information in a subsequent CSI report, so that continued reporting/postponed reporting of the input information and/or processing information that should have been reported but is not reported is implemented through the subsequent CSI report.

Optionally, in response to a current CSI report in which the input information and/or processing information that should have been reported is included being not to be reported, the terminal device may send the input information and/or the processing information at an available time domain position after a time domain position of the current CSI report, so that continued reporting/postponed reporting of the input information and/or processing information that should have been reported but is not reported is implemented through the subsequent available time domain position.

For example, the terminal device may send the input information and/or the processing information at an available uplink slot after an uplink slot in which the current CSI report is located.

Below, taking interaction between a network device and a terminal device as an example, "Method 1" is exemplarily illustrated. As shown in FIG. 8, FIG. 8 is a flow schematic diagram of another communication method in the embodiments of the present disclosure. Herein, the method includes the following steps.

S810: in response to the first CSI report in which first input information and/or first processing information is included being not to be reported, the terminal device sends a second CSI report, where the second CSI report includes the first input information and/or the first processing information, or the terminal device sends the first input information and/or the first processing information at an available time domain position after a time domain position of the first CSI report.

Herein, the first processing information is information obtained by inputting the first input information into the first AI model or information obtained by further processing information obtained by inputting the first input information into the first AI model.

Correspondingly, the network device receives the second CSI report, or receives the first input information and/or the first processing information at the available time domain position after the time domain position of the first CSI report.

It can be seen that when it is originally intended to report the first input information and/or the first processing information through the first CSI report, but since the first CSI report fails to be reported, this causes the first input information and/or the first processing information that should have been reported not to be reported, the terminal device may carry the first input information and/or the first processing information through the second CSI report, so that continued reporting of the first input information and/or the first processing information that should have been reported but is not reported is implemented.

Alternatively, when the first input information and/or the first processing information that should have been reported fails to be reported, the terminal device may send the first input information and/or the first processing information at an available time domain position after the time domain position of the first CSI report, so that continued reporting/postponed reporting of the first input information and/or the first processing information is implemented.

Optionally, a time domain position of the second CSI report is after the time domain position of the first CSI report. In this way, since the time domain position of the second CSI report is after the time domain position of the first CSI report, postponed reporting of the first input information and/or the first processing information that should have been reported but is not reported is implemented through the second CSI report.

Optionally, the second CSI report is a next CSI report adjacent to the first CSI report. In this way, postponed reporting of the first input information and/or the first processing information is implemented through the next CSI report adjacent to the first CSI report. Meanwhile, since the second CSI report and the first CSI report are adjacent, the time for postponing the reporting may be reduced.

Optionally, the method further includes:
sending, by the terminal device, postponement information, where the postponement information is used to indicate that the first input information and/or the first processing information is postponed reporting for the first CSI report.

Correspondingly, the network device receives the postponement information.

It can be seen that through the postponement information, it is indicated to the network device the postponed reporting of the first input information and/or the first processing information is for which CSI report, so as to know the original order of the information postponed to be reported, in CSI recovery.

Optionally, the postponement information may be carried by the second CSI report. In this way, the terminal device may both implement postponed reporting of the first input information and/or the first processing information that should have been reported but is not reported, and indicate to the network device the postponed reporting of the first input information and/or the first processing information is for which report, through the second CSI report.

Optionally, the postponement information is carried by at least one of a CSI report, higher layer signaling (such as RRC signaling or MAC signaling), or UCI.

### "Method 2"

In "Method 2", the terminal device may postpone reporting of the input information and/or processing information that should have been reported but is not reported. In this way, continued reporting of the input information and/or processing information that should have been reported but is not reported is implemented by postponing reporting, thereby avoiding the inability to perform CSI recovery on this part of information due to the network device being unable to receive the input information and/or processing information.

Meanwhile, when the input information and/or processing information that should have been reported but is not reported is postponed for reporting, since the input information and/or processing information that should have been reported but is not reported will be postponed to this subsequent CSI report, and this subsequent CSI report may originally have input information and/or processing information that needs to be reported, the terminal device may, in addition to reporting the input information and/or processing information that originally needs to be reported in this subsequent CSI report, also together report the input information and/or the processing information that should have been reported but is not reported.

Optionally, the input information that originally needs to be reported in this subsequent CSI report may be input information after the input information and/or processing information that should have been reported but is not reported; the processing information that originally needs to be reported in this subsequent CSI report may be processing information after the processing information that should have been reported but is not reported.

Optionally, the input information that originally needs to be reported in this subsequent CSI report may be remaining input information in a group to which the input information that should have been reported but is not reported belongs.

Optionally, the input information that originally needs to be reported in this subsequent CSI reporting and the input information that should have been reported but is not reported belong to the same grouping or belong to different groups.

Optionally, if the input information that originally needs to be reported in this subsequent CSI reporting and the input information that should have been reported but is not reported belong to different groups, the input information that originally needs to be reported in this subsequent CSI reporting may be initial input information in a new group.

Below, taking interaction between a network device and a terminal device as an example, "Method 2" is exemplarily illustrated. As shown in FIG. 9, FIG. 9 is a flow schematic diagram of another communication method in the embodiments of the present disclosure. Herein, the method includes the following steps.

S910: in response to the first CSI report in which the first input information and/or first processing information is included being not to be reported, the terminal device sends a second CSI report, where the second CSI report includes the first input information and/or the first processing information, and second input information and/or second processing information.

Herein, the second processing information is information obtained by inputting the second input information into the first AI model or information obtained by further processing information obtained by inputting the second input information into the first AI model.

Herein, the first input information and the second input information are different input information.

Correspondingly, the network device receives the second CSI report.

It can be seen that when it is originally intended to report the first input information and/or the first processing information through the first CSI report, since the first CSI report fails to be reported, which causes the first input information and/or the first processing information that should have been reported not to be reported, the first input information and/or the first processing information and the second input information and/or the second processing information are carried through the second CSI report, so that both postponing the reporting of the first input information and/or the first processing information, and reporting the second input information and/or the second processing information required to be reported in the second CSI report are implemented through the second CSI report, to avoid loss of the second input information and/or the second processing information.

Optionally, the second input information and/or the second processing information may be input information and/or processing information that originally needs to be carried by the second CSI report. In this way, the second input information and/or the second processing information that originally needs to be reported can be reported through the second CSI report, and together, the first input information and/or the first processing information can also be reported through the second CSI report.

Optionally, the second input information may be input information after the first input information; the second processing information may be processing information after the first processing information.

Optionally, the second input information may be remaining input information in a group to which the first input information belongs.

Optionally, the first input information and the second input information are in a same grouping or in different groups. If the first input information and the second input information are in different groups, the second input information is initial input information in a group.

It can be seen that when postponing the reporting of the input information that should have been reported but is not reported (i.e., the first input information) in an original group, this embodiment may not reconstitute a group for the remaining input information after the input information in the original group (i.e., the second input information), but continue to report the input information and the remaining input information after the output information in the original group.

Alternatively, this embodiment may reconstitute a group for the remaining input information after the input information (i.e., the first input information) in the original group, so that the remaining input information (i.e., the second input information) after the input information is used as initial input information in the new group, so the terminal device can continue to report the input information and the initial input information in the new group.

Optionally, the time domain position of the second CSI report is after the time domain position of the first CSI report. In this way, since the time domain position of the second CSI report is after the time domain position of the first CSI report, postponed reporting of the first input information and/or the first processing information that should have been reported but is not reported is implemented through the second CSI report.

Optionally, the second CSI report is a next CSI report adjacent to the first CSI report. In this way, postponed reporting of the first input information and/or the first processing information is implemented through the next CSI report adjacent to the first CSI report. Meanwhile, since the second CSI report and the first CSI report are adjacent, the time for postponing the reporting may be reduced.

Optionally, the method further includes:
sending, by the terminal device, postponement information, where the postponement information is used to indicate that the first input information and/or the first processing information is postponed reporting for the first CSI report.

Correspondingly, the network device receives the postponement information.

It can be seen that through the postponement information, it is indicated to the network device the postponed reporting of the first input information and/or the first processing information is for which CSI report, so as to know the original order of the information postponed to be reported, in CSI recovery.

Optionally, the postponement information may be carried by the second CSI report. In this way, the terminal device can both implement postponed reporting of the first input information and/or the first processing information that should have been reported but is not reported, and indicate to the network device the first input information and/or the first processing information is the postponed reporting for which report, through the second CSI report.

Optionally, the postponement information is carried by at least one of a CSI report, higher layer signaling (such as RRC signaling or MAC signaling), or UCI.

### "Method 3"

In "Method 3", for the input information and/or processing information that should have been reported but is not reported, the terminal device may choose to no longer report the input information and/or processing information that should have been reported but is not reported.

Based on this, in "Method 3", when the terminal device no longer reports the current input information and/or current processing information, the terminal device may start reporting other input information.

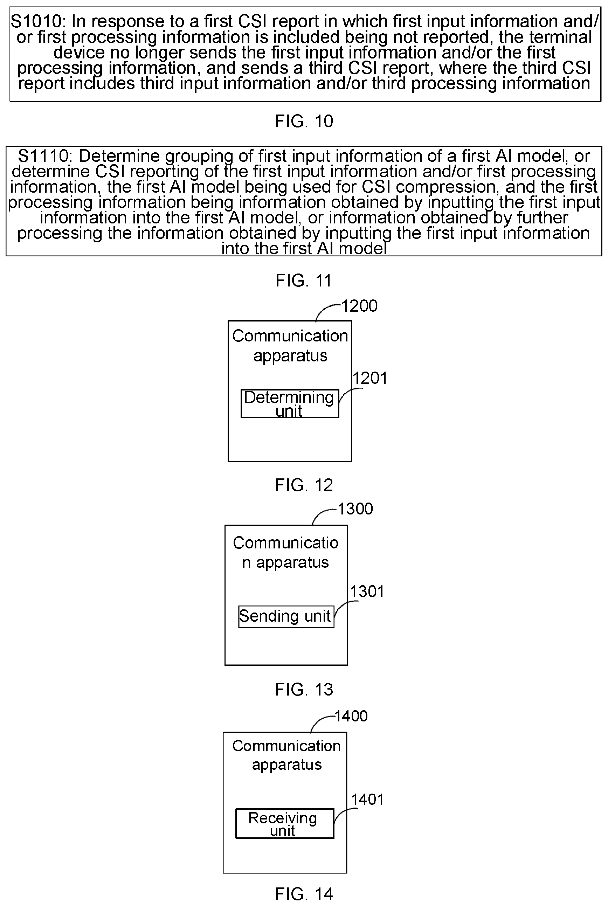

Below, taking interaction between a network device and a terminal device as an example, "Method 3" is exemplarily illustrated. As shown in FIG. 10, FIG. 10 is a flow schematic diagram of another communication method in the embodiments of the present disclosure. Herein, the method includes the following steps.

S1010: in response to a first CSI report in which the first input information and/or the first processing information is included being not to be reported, the terminal device no longer sends the first input information and/or the first processing information, and sends a third CSI report, where the third CSI report includes third input information and/or third processing information.

Herein, the third processing information is information obtained by inputting the third input information into the first AI model, or information obtained by further processing information obtained by inputting the third input information into the first AI model.

Herein, the first input information and the third input information are different input information.

Correspondingly, the network device receives the third CSI report.

It can be seen that when it is originally intended to report the first input information and/or the first processing information through the first CSI report, since the first CSI report fails to be reported, which causes the first input information and/or the first processing information that should have been reported not to be reported, the terminal device no longer reports the first input information and/or the first processing information, but reports the third input information and/or the third processing information through the third CSI report, thereby implementing reporting of new input information and/or new processing information, to avoid loss of the new input information and/or the new processing information.

Optionally, the third input information and/or the third processing information may be input information and/or processing information that originally needs to be carried by the third CSI report. In this way, the third input information and/or the third processing information that originally needs to be reported is reported through the third CSI report.

Optionally, the third input information may be input information after the first input information; the third processing information may be processing information after the first processing information.

Optionally, the third input information may be remaining input information in the group to which the first input information belongs.

Optionally, a time domain position of the third CSI report is after the time domain position of the first CSI report.

Optionally, the first input information and the third input information are in different groups, and the third input information is initial input information in a group.

It can be seen that when no longer reporting the input information (i.e., the first input information) that should have been reported but is not reported in the original group, this embodiment may reconstitute a group for the remaining input information after the input information in the original group, so that the remaining input information after the input information is used as initial input information (i.e., the third input information) in the new group, so the terminal device can report the initial input information in the new group.

Optionally, the third CSI report is a next CSI report adjacent to the first CSI report. In this way, postponed reporting of the third input information and/or the third processing information is implemented through the next CSI report adjacent to the first CSI report.

### [Exemplary illustration of a communication method]

Combined with the above content, an exemplary illustration of another communication method in the embodiments of the present disclosure is given below, as shown in FIG. 11. In FIG. 11, the method may be applied to a terminal device. The method includes the following steps.

S1110: grouping of first input information of a first AI model is determined, or CSI reporting of first input information and/or first processing information is determined; the first AI model is used for CSI compression, and the first processing information is information obtained by inputting the first input information into the first AI model or information obtained by further processing information obtained by inputting the first input information into the first AI model.

It can be seen that when the AI technology is applied to the CSI framework, for the enhancement of CSI compression and CSI recovery, since the first AI model performs CSI compression on input information in order, historical input information may participate in CSI compression of current input information, previously obtained processing information may be used as historical processing information to participate in the CSI compression of the current input information, and/or previously obtained compression intermediate information may be used as historical compression intermediate information to participate in the CSI compression of the current input information, so this embodiment needs to determine grouping of the input information. In this way, the first AI model may be used to perform CSI compression on initial input information within a group, and perform CSI compression on non-initial input information within the group by using the historical input information within the group, thereby achieving the enhancement of the CSI-related processing.

Alternatively, when the terminal device may need to report/feed back input information and/or processing information, since some input information and/or processing information that should have been reported/fed back fails to be reported due to some factors, dropping of input information and/or processing information occurs. In this way, for the input information and/or processing information that should have been reported but is not reported, this embodiment may determine the CSI reporting of the input information and/or processing information that should have been reported but is not reported, thereby achieving the enhancement of the CSI-related processing.

Optionally, the first AI model is used to perform CSI compression on initial input information, and perform CSI compression on non-initial input information by using first historical information.

The first historical information includes at least one of historical input information, historical processing information, or historical compression intermediate information, the historical processing information is information obtained by inputting the historical input information into the first AI model or information obtained by further processing information obtained by inputting the historical input information into the first AI model, and the historical compression intermediate information is information generated in a process of compressing the historical input information by the first AI model.

Optionally, historical input information within a group participates in CSI compression of non-initial input information within the same group, and all input information in a group does not participate in CSI compression of any input information in other groups.

Optionally, the first input information is among input information corresponding to at least one CSI report, and a time domain behavior of the at least one CSI report is at least one of periodic, semi-persistent, or aperiodic; or,
the first input information is among input information corresponding to at least one measurement resource;
a time domain behavior of the at least one measurement resource is at least one of periodic, semi-persistent, or aperiodic.

Optionally, the input information corresponding to the at least one CSI report is input into the first AI model according to an order of time domain positions of CSI reports or a magnitude order of identities (IDs) of CSI reports; or,
the input information corresponding to the at least one measurement resource is input into the first AI model according to an order of time domain positions of measurement resources or a magnitude order of IDs of measurement resources.

Optionally, the at least one CSI report includes all aperiodic CSI reports triggered by one downlink control information (DCI).

Optionally, in S1110, determining the grouping of the first input information of the first AI model, includes:
receiving configuration information, where the configuration information is used to configure a time window; and
determining the grouping of the first input information of the first AI model according to the time window.

Optionally, in response to the first input information being among input information corresponding to at least one CSI report, and a time domain position of the at least one CSI report being within the time window, the input information corresponding to the at least one CSI report belongs to a same group.

Optionally, in response to the first input information being among input information corresponding to at least one measurement resource, and a time domain position of the at least one measurement resource being within the time window or a time domain position of a CSI report associated with the at least one measurement resource being within the time window, the input information corresponding to the at least one measurement resource belongs to a same group.

Optionally, the configuration information includes at least one of length information, starting information, or period information.

The length information is used to configure a length of the time window.

The starting information is used to configure a starting position of the time window.

The period information is used to configure a period of the time window.

Optionally, the length of the time window is an integer multiple of a CSI report period.

Optionally, the starting position of the time window satisfies the following: $\left({N}_{slot}^{frame , μ}{n}_{f}+{n}_{s , f}^{μ}-{T}_{offset}\right) mod \left(N∗{T}_{CSI}\right) = 0 ;$ or, $\left({N}_{slot}^{frame , μ}\left({n}_{f}-{n}_{f}^{start}\right)+{n}_{s , f}^{μ}-{n}_{s , f}^{start}\right) mod \left(N∗{T}_{CSI}\right) = 0 ;$ where *µ* represents a subcarrier spacing configuration of an uplink bandwidth part (BWP) transmitting the CSI report; ${N}_{slot}^{frame , μ}$ represents a number of slots in a frame under the subcarrier spacing configuration *µ*; *n_{f}* represents a system frame number in which the CSI report is located; ${n}_{s , f}^{μ}$ represents a slot number in which the CSI report is located; *T_{offset}* represents a slot offset; *N* represents a maximum number of input information within a group; *T_{CSI}* represents a CSI report period; ${n}_{f}^{start}$ represents a system frame number in which a physical uplink shared channel (PUSCH) sending an initial CSI report after activation of DCI is located; and ${n}_{s , f}^{start}$ represents a slot number in which a PUSCH sending an initial CSI report after activation of DCI is located.

Optionally, in S1110, determining the grouping of the first input information of the first AI model, includes:
receiving indication information, where the indication information is used to indicate the grouping of the first input information of the first AI model; and
determining the grouping of the first input information according to the indication information.

Optionally, the method further includes:
sending first position information, where the first position information is used to indicate a position of the first input information in the group or a position of the first processing information in the group.

Optionally, in S1110, determining the CSI reporting of the first input information and/or the first processing information, includes:
in response to a first CSI report in which the first input information and/or the first processing information is included being not reported, sending a second CSI report, where the second CSI report includes the first input information and/or the first processing information, or sending the first input information and/or the first processing information at an available time domain position after a time domain position of the first CSI report.

Optionally, in S1110, determining the CSI reporting of the first input information and/or the first processing information, includes:
in response to a first CSI report in which the first input information and/or the first processing information is included being not reported, sending a second CSI report, where the second CSI report includes the first input information and/or the first processing information, and second input information and/or second processing information;
where the second processing information is information obtained by inputting the second input information into the first AI model or information obtained by further processing information obtained by inputting the second input information into the first AI model;
where the first input information and the second input information are different input information.

Optionally, a time domain position of the second CSI report is after a time domain position of the first CSI report.

Optionally, the first input information and the second input information are in the same grouping or in different groups; if the first input information and the second input information are in different groups, the second input information is initial input information in a group.

Optionally, the method further includes:
sending postponement information, where the postponement information is used to indicate that the first input information and/or the first processing information is postponed reporting for the first CSI report.

Optionally, in S1110, determining the CSI reporting of the first input information and/or the first processing information, includes:
in response to a first CSI report in which the first input information and/or the first processing information is included being not reported, no longer sending the first input information and/or the first processing information, and sending a third CSI report, where the third CSI report includes third input information and/or third processing information;
where the third processing information is information obtained by inputting the third input information into the first AI model or information obtained by further processing information obtained by inputting the third input information into the first AI model;
where the first input information and the third input information are different input information.

Optionally, a time domain position of the third CSI report is after the time domain position of the first CSI report. Optionally, the first input information and the third input information are in different groups, and the third input information is initial input information in a group.

### III. Exemplary illustration of a communication apparatus

### [Description]

The above mainly introduces the solutions of the embodiments of the present disclosure from the method perspective. It can be understood that in order to implement the above functions, the terminal device includes corresponding hardware structures and/or software modules for performing each function. Those skilled in the art should easily be aware that, combined with the units and algorithm steps of each example described in the embodiments disclosed herein, the present disclosure can be implemented in the form of hardware or a combination of hardware and computer software. Whether a certain function is performed in the manner of hardware or computer software driving hardware depends on the specific applications and design constraint conditions of the technical solutions. Those skilled in the art may use different methods to implement the described functions for each specific application, but such an implementation should not be considered as exceeding the scope of the present disclosure.

The embodiments of the present disclosure may divide the terminal device into functional units according to the above method examples. For example, each functional unit may be divided corresponding to each function, or two or more functions may be integrated into a processing unit. The above integrated unit may be implemented in the form of hardware, or may be implemented in the form of a software program module. It should be noted that the division of units in the embodiments of the present disclosure is schematic and is only a division of logical functions, and there may be other division methods in actual implementations.

In the case of using the integrated unit, FIG. 12 is a block diagram of functional units of a communication apparatus in the embodiments of the present disclosure. Herein, a communication apparatus 1200 includes a determining unit 1201.

Optionally, the determining unit 1201 may be a module unit, configured to perform reception processing on a signal, information, etc., or determine a monitoring mechanism, which is not specifically limited thereto.

Optionally, the communication apparatus 1200 may further include a storage unit, configured to store computer program code or instructions executed by the communication apparatus 1200. Herein, the storage unit may be a memory.

Optionally, the communication apparatus 1200 may be a chip or a chip module.

Optionally, the determining unit 1201 may be integrated in a communication unit. Herein, the communication unit may be a communication interface, a transceiver, a transceiving circuit, etc.

Optionally, the determining unit 1201 may be integrated in a processing unit.

It should be noted that the processing unit may be a processor or a controller, for example, may be a baseband processor, a baseband chip, a central processing unit (CPU), a general-purpose processor, a digital signal processor (DSP), an application-specific integrated circuit (ASIC), a field programmable gate array (FPGA) or other programmable logic device, transistor logic device, hardware component, or any combination thereof. It may implement or perform various exemplary logical blocks, modules, and circuits described in conjunction with the content disclosed in the present disclosure. The processing unit may also be a combination implementing a computing function, for example, including a combination of one or more microprocessors, a combination of a DSP and a microprocessor, etc.

Optionally, the communication apparatus 1200 is configured to perform any step performed by the terminal device/chip/chip module, etc., in the above method embodiments.

In a specific implementation, the determining unit 1201 is configured to perform any step in the above method embodiments, and when performing an action such as sending, may optionally call another unit to complete the corresponding operation. A detailed description is given below.

The determining unit 1201 is configured to determine grouping of first input information of a first AI model, or determine CSI reporting of first input information and/or first processing information;
the first AI model is used for CSI compression, and the first processing information is information obtained by inputting the first input information into the first AI model or information obtained by further processing information obtained by inputting the first input information into the first AI model.

It can be seen that when the AI technology is applied to the CSI framework, for the enhancement of CSI compression and CSI recovery, since the first AI model performs CSI compression on input information in order, historical input information may participate in CSI compression of current input information, previously obtained processing information may be used as historical processing information to participate in the CSI compression of the current input information, and/or previously obtained compression intermediate information may be used as historical compression intermediate information to participate in the CSI compression of the current input information, so this embodiment needs to determine grouping of the input information. In this way, the first AI model may be used to perform CSI compression on initial input information within a group, and perform CSI compression on non-initial input information within the group by using the historical input information within the group, thereby achieving the enhancement of the CSI-related processing.

Alternatively, the terminal device may need to report/feed back input information and/or processing information. However, some input information and/or processing information that should have been reported/fed back fails to be reported due to some factors, so dropping of input information and/or processing information occurs. For the input information and/or processing information that should have been reported but is not reported, this embodiment may need to determine the CSI reporting of the input information and/or processing information that should have been reported but is not reported, thereby achieving the enhancement of the CSI-related processing.

It should be noted that the specific implementation of each operation in the embodiment described in FIG. 12 may be detailed in the description in the above method embodiments, which will not be repeated specifically here.

### [Some possible implementations]

Optionally, the first AI model is used to perform CSI compression on initial input information, and perform CSI compression on non-initial input information by using first historical information.

The first historical information includes at least one of historical input information, historical processing information, or historical compression intermediate information, the historical processing information is information obtained by inputting the historical input information into the first AI model or information obtained by further processing information obtained by inputting the historical input information into the first AI model, and the historical compression intermediate information is information generated in a process of compressing the historical input information by the first AI model.

Optionally, historical input information within a group participates in CSI compression of non-initial input information within the same group, and all input information in a group does not participate in CSI compression of any input information in other groups.

Optionally, the first input information is among input information corresponding to at least one CSI report, and a time domain behavior of the at least one CSI report is at least one of periodic, semi-persistent, or aperiodic; or,
the first input information is among input information corresponding to at least one measurement resource;
a time domain behavior of the at least one measurement resource is at least one of periodic, semi-persistent, or aperiodic.

Optionally, the input information corresponding to the at least one CSI report is input into the first AI model according to an order of time domain positions of CSI reports or a magnitude order of identities (IDs) of CSI reports; or,
the input information corresponding to the at least one measurement resource is input into the first AI model according to an order of time domain positions of measurement resources or a magnitude order of IDs of measurement resources.

Optionally, the at least one CSI report includes all aperiodic CSI reports triggered by one DCI.

Optionally, during determining the grouping of the first input information of the first AI model, the determining unit 1201 is configured to:
receive configuration information, where the configuration information is used to configure a time window; and
determine the grouping of the first input information of the first AI model according to the time window.

Optionally, in response to the first input information being among input information corresponding to at least one CSI report, and a time domain position of the at least one CSI report being within the time window, the input information corresponding to the at least one CSI report belongs to a same group.

Optionally, in response to the first input information being among input information corresponding to at least one measurement resource, and a time domain position of the at least one measurement resource being within the time window or a time domain position of a CSI report associated with the at least one measurement resource being within the time window, the input information corresponding to the at least one measurement resource belongs to a same group.

Optionally, the configuration information includes at least one of length information, starting information, or period information.

The length information is used to configure a length of the time window.

The starting information is used to configure a starting position of the time window.

The period information is used to configure a period of the time window.

Optionally, the length of the time window is an integer multiple of a CSI report period.

Optionally, the starting position of the time window satisfies the following: $\left({N}_{slot}^{frame , μ}{n}_{f}+{n}_{s , f}^{μ}-{T}_{offset}\right) mod \left(N∗{T}_{CSI}\right) = 0 ;$ or, $\left({N}_{slot}^{frame , μ}\left({n}_{f}-{n}_{f}^{start}\right)+{n}_{s , f}^{μ}-{n}_{s , f}^{start}\right) mod \left(N∗{T}_{CSI}\right) = 0 ;$ where *µ* represents a subcarrier spacing configuration of an uplink bandwidth part (BWP) transmitting the CSI report; ${N}_{slot}^{frame , μ}$ represents a number of slots in a frame under the subcarrier spacing configuration *µ*; *n_{f}* represents a system frame number in which the CSI report is located; ${n}_{s , f}^{μ}$ represents a slot number in which the CSI report is located; *T_{offset}* represents a slot offset; *N* represents a maximum number of input information within a group; *T_{CSI}* represents a CSI report period; ${n}_{f}^{start}$ represents a system frame number in which a physical uplink shared channel (PUSCH) sending an initial CSI report after activation of DCI is located; and ${n}_{s , f}^{start}$ represents a slot number in which a PUSCH sending an initial CSI report after activation of DCI is located.

Optionally, during determining the grouping of the first input information of the first AI model, the determining unit 1201 is configured to:
receive indication information, where the indication information is used to indicate the grouping of the first input information of the first AI model; and
determine the grouping of the first input information according to the indication information.

Optionally, the communication apparatus 1200 further includes a sending unit;
the sending unit is configured to send first position information, where the first position information is used to indicate a position of the first input information in the group or a position of the first processing information in the group.

Optionally, during determining the CSI reporting of the first input information and/or the first processing information, the determining unit 1201 is configured to:
in response to a first CSI report in which the first input information and/or the first processing information is included being not reported, sending a second CSI report, where the second CSI report includes the first input information and/or the first processing information, or sending the first input information and/or the first processing information at an available time domain position after a time domain position of the first CSI report.

Optionally, during determining the CSI reporting of the first input information and/or the first processing information, the determining unit 1201 is configured to:
in response to a first CSI report in which the first input information and/or the first processing information is included being not reported, sending a second CSI report, where the second CSI report includes the first input information and/or the first processing information, and second input information and/or second processing information;
where the second processing information is information obtained by inputting the second input information into the first AI model or information obtained by further processing information obtained by inputting the second input information into the first AI model;
where the first input information and the second input information are different input information.

Optionally, a time domain position of the second CSI report is after a time domain position of the first CSI report.

Optionally, the first input information and the second input information are in the same grouping or in different groups; if the first input information and the second input information are in different groups, the second input information is initial input information in a group.

Optionally, the communication apparatus 1200 further includes a sending unit;
the sending unit is configured to send postponement information, where the postponement information is used to indicate that the first input information and/or the first processing information is postponed reporting for the first CSI report.

Optionally, during determining the CSI reporting of the first input information and/or the first processing information, the determining unit 1201 is configured to:
in response to a first CSI report in which the first input information and/or the first processing information is included being not reported, no longer sending the first input information and/or the first processing information, and sending a third CSI report, where the third CSI report includes third input information and/or third processing information;
where the third processing information is information obtained by inputting the third input information into the first AI model or information obtained by further processing information obtained by inputting the third input information into the first AI model;
where the first input information and the third input information are different input information.

Optionally, a time domain position of the third CSI report is after the time domain position of the first CSI report.

Optionally, the first input information and the third input information are in different groups, and the third input information is initial input information in a group.

### IV. Exemplary illustration of another communication apparatus

### [Description]

The above mainly introduces the solutions of the embodiments of the present disclosure from the method perspective. It can be understood that in order to implement the above functions, the network device includes corresponding hardware structures and/or software modules for performing each function. Those skilled in the art should easily be aware that, combined with the units and algorithm steps of each example described in the embodiments disclosed herein, the present disclosure can be implemented in the form of hardware or a combination of hardware and computer software. Whether a certain function is performed in the manner of hardware or computer software driving hardware depends on the specific applications and design constraint conditions of the technical solutions. Those skilled in the art may use different methods to implement the described functions for each specific application, but such an implementation should not be considered as exceeding the scope of the present disclosure.

The embodiments of the present disclosure may divide the network device into functional units according to the above method examples. For example, each functional unit may be divided corresponding to each function, or two or more functions may be integrated into a processing unit. The above integrated unit may be implemented in the form of hardware, or may be implemented in the form of a software program module. It should be noted that the division of units in the embodiments of the present disclosure is schematic and is only a division of logical functions, and there may be other division methods in actual implementations.

In the case of using the integrated unit, FIG. 13 is a block diagram of functional units of a communication apparatus in the embodiments of the present disclosure. Herein, a communication apparatus 1300 includes a sending unit 1301.

Optionally, the sending unit 1301 may be a module unit, configured to perform sending processing on a signal, information, etc., which is not specifically limited thereto.

Optionally, the communication apparatus 1300 may further include a receiving unit. Herein, the receiving unit may be a module unit configured to perform reception processing on a signal, information, etc., which is not specifically limited thereto.

Optionally, the communication apparatus 1300 may further include a storage unit, configured to store computer program code or instructions executed by the communication apparatus 1300. Herein, the storage unit may be a memory.

Optionally, the communication apparatus 1300 may be a chip or a chip module.

Optionally, the sending unit 1301 may be integrated in a communication unit. Herein, the communication unit may be a communication interface, a transceiver, a transceiving circuit, etc.

Optionally, the sending unit 1301 may be integrated in a processing unit.

It should be noted that the processing unit may be a processor or a controller, for example, may be a baseband processor, a baseband chip, a central processing unit (CPU), a general-purpose processor, a digital signal processor (DSP), an application-specific integrated circuit (ASIC), a field programmable gate array (FPGA) or other programmable logic device, transistor logic device, hardware component, or any combination thereof. It may implement or perform various exemplary logical blocks, modules, and circuits described in conjunction with the content disclosed in the present disclosure. The processing unit may also be a combination implementing a computing function, for example, including a combination of one or more microprocessors, a combination of a DSP and a microprocessor, etc.

Optionally, the communication apparatus 1300 is configured to perform any step performed by the chip/chip module/network device, etc., in the above method embodiments.

In a specific implementation, the sending unit 1301 is configured to perform any step in the above method embodiments, and when performing an action such as reception, may optionally call another unit to complete the corresponding operation. A detailed description is given below.

The sending unit 1301 is configured to send configuration information, where the configuration information is used to configure a time window, and the time window is used to determine grouping of first input information of a first AI model; or, configured to send indication information, where the indication information is used to indicate grouping of first input information of a first AI model; the first AI model is used for channel state information (CSI) compression.

It can be seen that when the AI technology is applied to the CSI framework, for the enhancement of CSI compression and CSI recovery, since the first AI model performs CSI compression on input information in order, historical input information may participate in CSI compression of current input information, previously obtained processing information may be used as historical processing information to participate in the CSI compression of the current input information, and/or previously obtained compression intermediate information may be used as historical compression intermediate information to participate in the CSI compression of the current input information, so this embodiment needs to determine grouping of the input information. In this way, the first AI model may be used to perform CSI compression on initial input information within a group, and perform CSI compression on non-initial input information within the group by using the historical input information within the group, thereby achieving the enhancement of the CSI-related processing.

It should be noted that the specific implementation of each operation in the embodiment described in FIG. 13 may be detailed in the description in the above method embodiments, which will not be repeated specifically here.

### [Some possible implementations]

Optionally, the first AI model is used to perform CSI compression on initial input information, and perform CSI compression on non-initial input information by using first historical information.

The first historical information includes at least one of historical input information, historical processing information, or historical compression intermediate information, the historical processing information is information obtained by inputting the historical input information into the first AI model or information obtained by further processing information obtained by inputting the historical input information into the first AI model, and the historical compression intermediate information is information generated in a process of compressing the historical input information by the first AI model.

Optionally, historical input information within a group participates in CSI compression of non-initial input information within the same group, and all input information in a group does not participate in CSI compression of any input information in other groups.

Optionally, in response to the first input information being among input information corresponding to at least one CSI report, and a time domain position of the at least one CSI report being within the time window, the input information corresponding to the at least one CSI report belongs to a same group; or,
in response to the first input information being among input information corresponding to at least one measurement resource, and a time domain position of the at least one measurement resource being within the time window or a time domain position of a CSI report associated with the at least one measurement resource being within the time window, the input information corresponding to the at least one measurement resource belongs to a same group.

Optionally, the configuration information includes at least one of length information, starting information, or period information.

The length information is used to configure a length of the time window.

The starting information is used to configure a starting position of the time window.

The period information is used to configure a period of the time window.

Optionally, the length of the time window is an integer multiple of a CSI report period; or,
the starting position of the time window satisfies the following: $\left({N}_{slot}^{frame , μ}{n}_{f}+{n}_{s , f}^{μ}-{T}_{offset}\right) mod \left(N∗{T}_{CSI}\right) = 0 ;$ or, $\left({N}_{slot}^{frame , μ}\left({n}_{f}-{n}_{f}^{start}\right)+{n}_{s , f}^{μ}-{n}_{s , f}^{start}\right) mod \left(N∗{T}_{CSI}\right) = 0 ;$
where *µ* represents a subcarrier spacing configuration of an uplink bandwidth part (BWP) transmitting the CSI report; ${N}_{slot}^{frame , μ}$ represents a number of slots in a frame under the subcarrier spacing configuration *µ*; *n_{f}* represents a system frame number in which the CSI report is located; ${n}_{s , f}^{μ}$ represents a slot number in which the CSI report is located; *T_{offset}* represents a slot offset; *N* represents a maximum number of input information within a group; *T_{CSI}* represents a CSI report period; ${n}_{f}^{start}$ represents a system frame number in which a physical uplink shared channel (PUSCH) sending an initial CSI report after activation of DCI is located; and ${n}_{s , f}^{start}$ represents a slot number in which a PUSCH sending an initial CSI report after activation of DCI is located.

Optionally, the communication apparatus 1300 further includes a receiving unit;
the receiving unit is configured to receive first position information, where the first position information is used to indicate a position of the first input information in the group or a position of the first processing information in the group.

### V. Exemplary illustration of another communication apparatus

### [Description]

In the case of using the integrated unit, FIG. 14 is a block diagram of functional units of a communication apparatus in the embodiments of the present disclosure. Herein, a communication apparatus 1400 includes a receiving unit 1401.

Optionally, the receiving unit 1401 may be a module unit, configured to perform reception processing on a signal, information, etc., which is not specifically limited thereto.

Optionally, the communication apparatus 1400 may further include a receiving unit. Herein, the receiving unit may be a module unit configured to perform reception processing on a signal, information, etc., which is not specifically limited thereto.

Optionally, the communication apparatus 1400 may further include a storage unit, configured to store computer program code or instructions executed by the communication apparatus 1400. Herein, the storage unit may be a memory.

Optionally, the communication apparatus 1400 may be a chip or a chip module.

Optionally, the receiving unit 1401 may be integrated in a communication unit. Herein, the communication unit may be a communication interface, a transceiver, a transceiving circuit, etc.

Optionally, the receiving unit 1401 may be integrated in a processing unit.

It should be noted that the processing unit may be a processor or a controller, for example, may be a baseband processor, a baseband chip, a central processing unit (CPU), a general-purpose processor, a digital signal processor (DSP), an application-specific integrated circuit (ASIC), a field programmable gate array (FPGA) or other programmable logic device, transistor logic device, hardware component, or any combination thereof. It may implement or perform various exemplary logical blocks, modules, and circuits described in conjunction with the content disclosed in the present disclosure. The processing unit may also be a combination implementing a computing function, for example, including a combination of one or more microprocessors, a combination of a DSP and a microprocessor, etc.

Optionally, the communication apparatus 1400 is configured to perform any step performed by the chip/chip module/network device, etc., in the above method embodiments.

In a specific implementation, the receiving unit 1401 is configured to perform any step in the above method embodiments, and when performing an action such as reception, may optionally call another unit to complete the corresponding operation. A detailed description is given below.

The receiving unit 1401 is configured to: in response to a first CSI report in which first input information and/or first processing information of a first AI model is included being not reported, receiving a second CSI report, where the second CSI report includes the first input information and/or the first processing information, or the second CSI report includes the first input information and/or the first processing information, and second input information and/or second processing information, where the first input information and the second input information are different input information; or
in response to a first CSI report in which first input information and/or first processing information of a first AI model is included being not reported, receiving the first input information and/or the first processing information at an available time domain position after a time domain position of the first CSI report; or
in response to a first CSI report in which first input information and/or first processing information of a first AI model is included being not reported, receiving a third CSI report, where the third CSI report includes third input information and/or third processing information, where the first input information and the third input information are different input information;
where the first AI model is used for CSI compression, the first processing information is information obtained by inputting the first input information into the first AI model or information obtained by further processing information obtained by inputting the first input information into the first AI model.

It can be seen that when the first input information and/or the first processing information originally intended to be reported through the first CSI report, since the first CSI report fails to be reported, causing the first input information and/or the first processing information that should have been reported not to be reported, the first input information and/or the first processing information is carried through the second CSI report, thereby achieving continued reporting of the first input information and/or the first processing information that should have been reported but is not reported.

Alternatively, when the first input information and/or the first processing information that should have been reported fails to be reported, the first input information and/or the first processing information, and the second input information and/or the second processing information are carried through the second CSI report, thereby, through the second CSI report, postponing the reporting of the first input information and/or the first processing information, and reporting the second input information and/or the second processing information required to be reported in the second CSI report to avoid loss of the second input information and/or the second processing information.

Alternatively, when the first input information and/or the first processing information that should have been reported fails to be reported, the first input information and/or the first processing information is received at an available time domain position after a time domain position of the first CSI report, thereby achieving continued reporting/postponed reporting of the first input information and/or the first processing information.

Alternatively, when the first input information and/or the first processing information that should have been reported fails to be reported, the first input information and/or the first processing information is received at an available time domain position after a time domain position of the first CSI report, thereby achieving continued reporting/postponed reporting of the first input information and/or the first processing information.

It should be noted that the specific implementation of each operation in the embodiments described in FIG. 14 may be detailed in the description in the above method embodiments, which will not be repeated specifically here.

### [Some possible implementations]

Optionally, a time domain position of the second CSI report is after a time domain position of the first CSI report.

Optionally, a time domain position of the third CSI report is after a time domain position of the first CSI report.

Optionally, the first input information and the second input information are in a same group or in different groups; and in response to the first input information and the second input information being in different groups, the second input information is initial input information in a group; or
the first input information and the third input information are in different groups, and the third input information is initial input information in a group.

Optionally, the receiving unit 1401 is further configured to receive postponement information, where the postponement information is used to indicate that the first input information and/or the first processing information is postponed reporting for the first CSI report.

### VI. Exemplary illustration of a terminal device

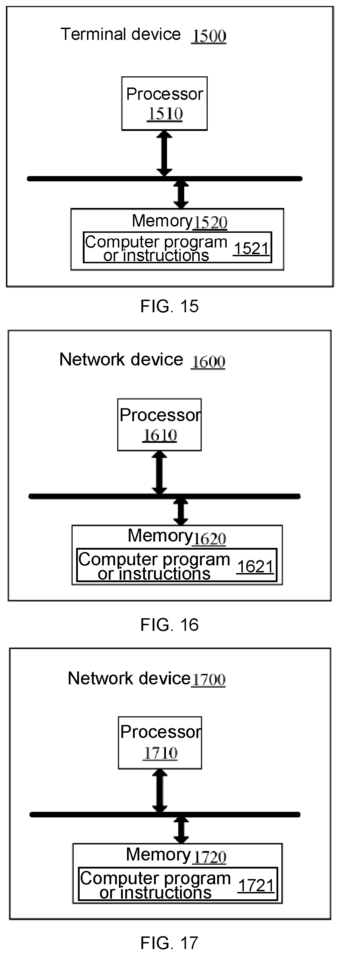

Please refer to FIG. 15, FIG. 15 is a structural schematic diagram of a terminal device in the embodiments of the present disclosure. Herein, a terminal device 1500 may include a processor 1510, a memory 1520, and a communication bus for connecting the processor 1510 and the memory 1520.

Optionally, the memory 1520 includes but is not limited to random access memory (RAM), read-only memory (ROM), erasable programmable read-only memory (EPROM), or compact disc read-only memory (CD-ROM), and the memory 1520 is configured to store a program code executed by the terminal device 1500 and transmitted data.

Optionally, the terminal device 1500 further includes a communication interface, which is configured to receive and send data.

Optionally, the terminal device 1500 may be the above first terminal device.

Optionally, the processor 1510 may be one or more CPUs; in a case where the processor 1510 is a CPU, the CPU may be a single-core CPU or a multi-core CPU.

Optionally, the processor 1510 may be a baseband chip, a chip, a CPU, a general-purpose processor, a DSP, an ASIC, an FPGA or other programmable logic device, transistor logic device, hardware component, or any combination thereof.

In a specific implementation, the processor 1510 in the terminal device 1500 is configured to execute a computer program or instructions 1521 stored in the memory 1520, to perform the following operations:
determining grouping of first input information of a first AI model, or determining CSI reporting of first input information and/or first processing information;
where the first AI model is used for CSI compression, and the first processing information is information obtained by inputting the first input information into the first AI model or information obtained by further processing information obtained by inputting the first input information into the first AI model.

It can be seen that when the AI technology is applied to the CSI framework, for the enhancement of CSI compression and CSI recovery, since the first AI model performs CSI compression on input information in order, historical input information may participate in CSI compression of current input information, previously obtained processing information may be used as historical processing information to participate in the CSI compression of the current input information, and/or previously obtained compression intermediate information may be used as historical compression intermediate information to participate in the CSI compression of the current input information, so this embodiment needs to determine grouping of the input information. In this way, the first AI model may be used to perform CSI compression on initial input information within a group, and perform CSI compression on non-initial input information within the group by using the historical input information within the group, thereby achieving the enhancement of the CSI-related processing.

Alternatively, when the terminal device needs to report/feed back input information and/or processing information, since some input information and/or processing information that should have been reported/fed back fails to be reported due to some factors, dropping of input information and/or processing information occurs. In this way, for the input information and/or processing information that should have been reported but is not reported, this embodiment may determine the CSI reporting of the input information and/or processing information that should have been reported but is not reported, thereby achieving the enhancement of the CSI-related processing.

It should be noted that the specific implementation of each operation may adopt the corresponding description of the above method embodiments, and the terminal device 1500 may be configured to perform the above method embodiments of the present disclosure, which will not be repeated here.

### VII. Exemplary illustration of a network device

Please refer to FIG. 16, FIG. 16 is a structural schematic diagram of a network device in the embodiments of the present disclosure. Herein, a network device 1600 may include a processor 1610, a memory 1620, and a communication bus for connecting the processor 1610 and the memory 1620.

Optionally, the memory 1620 includes but is not limited to RAM, ROM, EPROM, or CD-ROM, and the memory 1620 is configured to store relevant instructions and data.

Optionally, the network device 1600 further includes a communication interface, which is configured to receive and send data.

Optionally, the processor 1610 may be one or more CPUs. In a case where the processor 1610 is a CPU, the CPU may be a single-core CPU or a multi-core CPU.

Optionally, the processor 1610 may be a baseband chip, a chip, a CPU, a general-purpose processor, a DSP, an ASIC, an FPGA or other programmable logic device, transistor logic device, hardware component, or any combination thereof.

Optionally, the processor 1610 in the network device 1600 is configured to execute a computer program or instructions 1621 stored in the memory 1620, to perform the following operations:
sending configuration information, where the configuration information is used to configure a time window, and the time window is used to determine grouping of first input information of a first artificial intelligence (AI) model; or sending indication information, where the indication information is used to indicate grouping of first input information of a first AI model; where the first AI model is used for channel state information (CSI) compression.

It can be seen that when the AI technology is applied to the CSI framework, for the enhancement of CSI compression and CSI recovery, since the first AI model performs CSI compression on input information in order, historical input information may participate in CSI compression of current input information, previously obtained processing information may be used as historical processing information to participate in the CSI compression of the current input information, and/or previously obtained compression intermediate information may be used as historical compression intermediate information to participate in the CSI compression of the current input information, so this embodiment needs to determine grouping of the input information. In this way, the first AI model may be used to perform CSI compression on initial input information within a group, and perform CSI compression on non-initial input information within the group by using the historical input information within the group, thereby achieving the enhancement of the CSI-related processing.

It should be noted that the specific implementation of each operation may adopt the corresponding description of the above method embodiments, and the network device 1600 may be used to perform the above method embodiments of the present disclosure, which will not be repeated here.

### VIII. Exemplary illustration of another network device

Please refer to FIG. 17, FIG. 17 is a structural schematic diagram of a network device in the embodiments of the present disclosure. Herein, a network device 1700 may include a processor 1710, a memory 1720, and a communication bus for connecting the processor 1710 and the memory 1720.

Optionally, the memory 1720 includes but is not limited to RAM, ROM, EPROM, or CD-ROM, and the memory 1720 is configured to store relevant instructions and data.

Optionally, the network device 1700 further includes a communication interface, which is configured to receive and send data.

Optionally, the processor 1710 may be one or more CPUs. In a case where the processor 1710 is a CPU, the CPU may be a single-core CPU or a multi-core CPU.

Optionally, the processor 1710 may be a baseband chip, a chip, a CPU, a general-purpose processor, a DSP, an ASIC, an FPGA or other programmable logic device, transistor logic device, hardware component, or any combination thereof.

Optionally, the processor 1710 in the network device 1700 is configured to execute a computer program or instructions 1721 stored in the memory 1720, to perform the following operations:
in response to a first CSI report in which first input information and/or first processing information of a first AI model is included being not reported, receiving a second CSI report, where the second CSI report includes the first input information and/or the first processing information, or the second CSI report includes the first input information and/or the first processing information, and second input information and/or second processing information, where a time domain position of the second CSI report is after a time domain position of the first CSI report, and the first input information and the second input information are different input information; or
in response to a first CSI report in which first input information and/or first processing information of a first AI model is included being not reported, receiving the first input information and/or the first processing information at an available time domain position after a time domain position of the first CSI report; or
in response to a first CSI report in which first input information and/or first processing information of a first AI model is included being not reported, receiving a third CSI report, where the third CSI report includes third input information and/or third processing information, where a time domain position of the third CSI report is after a time domain position of the first CSI report, and the first input information and the third input information are different input information;
where the first AI model is used for CSI compression, the first processing information is information obtained by inputting the first input information into the first AI model or information obtained by further processing information obtained by inputting the first input information into the first AI model.

It can be seen that when the first input information and/or the first processing information originally intended to be reported through the first CSI report, since the first CSI report fails to be reported, causing the first input information and/or the first processing information that should have been reported not to be reported, the first input information and/or the first processing information is carried through the second CSI report, thereby achieving continued reporting of the first input information and/or the first processing information that should have been reported but is not reported.

Alternatively, when the first input information and/or the first processing information that should have been reported fails to be reported, the first input information and/or the first processing information, and the second input information and/or the second processing information are carried through the second CSI report, thereby, through the second CSI report, postponing the reporting of the first input information and/or the first processing information, and reporting the second input information and/or the second processing information required to be reported in the second CSI report to avoid loss of the second input information and/or the second processing information.

Alternatively, when the first input information and/or the first processing information that should have been reported fails to be reported, the first input information and/or the first processing information is received at an available time domain position after a time domain position of the first CSI report, thereby achieving continued reporting/postponed reporting of the first input information and/or the first processing information.

Alternatively, when the first input information and/or the first processing information that should have been reported fails to be reported, the first input information and/or the first processing information is no longer reported, but the third input information and/or the third processing information is reported through the third CSI report, achieving reporting of new input information and/or new processing information, to avoid loss of the new input information and/or the new processing information.

It should be noted that the specific implementation of each operation may adopt the corresponding description of the above method embodiments, and the network device 1700 may be used to perform the above method embodiments of the present disclosure, which will not be repeated here.

### IX. Other related exemplary illustration

Optionally, the above method embodiments may be applied to a terminal device or in a terminal device. That is, the execution subject of the above method embodiments may be a terminal device, may be a chip, a chip module, or a module, etc., which is not specifically limited thereto.

Optionally, the above method embodiments may be applied to a network device or in a network device. That is, the execution subject of the above method embodiments may be a network device, may be a chip, a chip module, or a module, etc., which is not specifically limited thereto.

The embodiments of the present disclosure further provide a chip, including a processor, a memory, and a computer program or instructions stored in the memory, where the processor executes the computer program or instructions to implement the steps described in the above method embodiments.

The embodiments of the present disclosure further provide a chip module, including a transceiver component and a chip, where the chip includes a processor, a memory, and a computer program or instructions stored in the memory, where the processor executes the computer program or instructions to implement the steps described in the above method embodiments.

The embodiments of the present disclosure further provide a computer-readable storage medium, storing a computer program or instructions, where the computer program or instructions, when executed, implement the steps described in the above method embodiments.

The embodiments of the present disclosure further provide a computer program product, including a computer program or instructions, where the computer program or instructions, when executed, implement the steps described in the above method embodiments.

The embodiments of the present disclosure further provide a communication system, including the above terminal device and the above network device.

It should be noted that for each of the above embodiments, for the sake of simple description, they are all expressed as a series of action combinations. Those skilled in the art should know that the present disclosure is not limited by the described order of actions, because some steps in the embodiments of the present disclosure may be performed in another order or simultaneously. In addition, those skilled in the art should also know that the embodiments described in the specification are all preferred embodiments, and the involved actions, steps, modules, or units, etc., are not necessarily essential to the embodiments of the present disclosure.

In the above embodiments, the descriptions of the various embodiments in the present disclosure each have a certain focus, and for a part not detailed in a certain embodiment, reference may be made to the relevant descriptions of other embodiments.

The steps of the methods or algorithms described in the embodiments of the present disclosure may be implemented in the form of hardware, or may be implemented in the form of a processor executing software instructions. The software instructions may consist of a corresponding software module, and the software module may be stored in RAM, flash memory, ROM, EPROM, electrically erasable programmable read-only memory (electrically EPROM, EEPROM), registers, a hard disk, a mobile hard disk, a compact disc read-only memory (CD-ROM), or any other form of storage medium well known in the art. An exemplary storage medium is coupled to the processor, so that the processor may read information from the storage medium and write information to the storage medium. Of course, the storage medium may also be a component of the processor. The processor and the storage medium may be located in an ASIC. In addition, the ASIC may be located in a terminal device or a management device. Of course, the processor and the storage medium may also exist as discrete components in a terminal device or a management device.

Those skilled in the art should be aware that, in one or more of the above examples, the functions described in the embodiments of the present disclosure may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or other programmable apparatuses. The computer instructions may be stored in a computer-readable storage medium, or transmitted from a computer-readable storage medium to another computer-readable storage medium. For example, the computer instructions may be transmitted from a website site, computer, server, or data center to another website site, computer, server, or data center in a wired (such as coaxial cable, optical fiber, digital subscriber line (DSL)) or wireless (such as infrared, wireless, microwave) manner. The computer-readable storage medium may be any available medium that can be accessed by a computer, or a data storage device such as a server or a data center integrated with one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

Each module/unit included in each apparatus and product described in the above embodiments may be a software module/unit, or may be a hardware module/unit, or may also be partially a software module/unit and partially a hardware module/unit. For example, for each apparatus and product applied to or integrated in a chip, each module/unit included therein may all be implemented in the form of hardware such as a circuit, or at least some modules/units may be implemented in the form of a software program, the software program runs on a processor integrated inside the chip, and the remaining (if any) part of the modules/units may be implemented in the form of hardware such as a circuit; for each apparatus and product applied to or integrated in a chip module, each module/unit included therein may all be implemented in the form of hardware such as a circuit, different modules/units may be located in the same component (such as a chip, a circuit module, etc.) or in different components of the chip module, or at least some modules/units may be implemented in the form of a software program, the software program runs on a processor integrated inside the chip module, and the remaining (if any) part of the modules/units may be implemented in the form of hardware such as a circuit; for each apparatus and product applied to or integrated in a terminal device, each module/unit included therein may all be implemented in the form of hardware such as a circuit, different modules/units may be located in the same component (such as a chip, a circuit module, etc.) or in different components within the terminal device, or at least some modules/units may be implemented in the form of a software program, the software program runs on a processor integrated inside the terminal device, and the remaining (if any) part of the modules/units may be implemented in the form of hardware such as a circuit.

The specific implementations described above further describe the purposes, technical solutions, and beneficial effects of the embodiments of the present disclosure in detail. It should be understood that the above description is only detailed description of the embodiments of the present disclosure and is not intended to limit the protection scope of the embodiments of the present disclosure; any modifications, equivalent substitutions, improvements, etc., made on the basis of the technical solutions of the embodiments of the present disclosure shall be included in the protection scope of the embodiments of the present disclosure.

## Claims

1. A communication method, comprising:
determining grouping of first input information of a first artificial intelligence, AI, model, or determining channel state information, CSI, reporting of first input information and/or first processing information;
wherein the first AI model is used for CSI compression, and the first processing information is information obtained by inputting the first input information into the first AI model or information obtained by further processing information obtained by inputting the first input information into the first AI model.

2. The method according to claim 1, wherein the first AI model is used to perform CSI compression for initial input information, and perform CSI compression for non-initial input information by using first historical information;
the first historical information comprises at least one of historical input information, historical processing information, or historical compression intermediate information, the historical processing information is information obtained by inputting the historical input information into the first AI model or information obtained by further processing information obtained by inputting the historical input information into the first AI model, and the historical compression intermediate information is information generated by the first AI model in a process of compressing the historical input information.

3. The method according to claim 1, wherein historical input information within a group participates in CSI compression of non-initial input information within the same group, and all input information in a group does not participate in CSI compression of any input information in other groups.

4. The method according to claim 1, wherein the first input information is among input information corresponding to at least one CSI report, and a time domain behavior of the at least one CSI report is at least one of periodic, semi-persistent, or aperiodic; or,
the first input information is among input information corresponding to at least one measurement resource;
a time domain behavior of the at least one measurement resource is at least one of periodic, semi-persistent, or aperiodic.

5. The method according to claim 4, wherein the input information corresponding to the at least one CSI report is input into the first AI model according to an order of time domain positions of CSI reports or a magnitude order of identities, IDs, of CSI reports; or,
the input information corresponding to the at least one measurement resource is input into the first AI model according to an order of time domain positions of measurement resources or a magnitude order of IDs of measurement resources.

6. The method according to any one of claims 1 to 5, wherein determining the grouping of the first input information of the first AI model, comprises:
receiving configuration information, wherein the configuration information is used to configure a time window; and
determining the grouping of the first input information of the first AI model according to the time window.

7. The method according to claim 6, wherein in response to the first input information being among input information corresponding to at least one CSI report, and a time domain position of the at least one CSI report being within the time window,
the input information corresponding to the at least one CSI report belongs to a same group.

8. The method according to claim 6, wherein in response to the first input information being among input information corresponding to at least one measurement resource, and a time domain position of the at least one measurement resource being within the time window or a time domain position of a CSI report associated with the at least one measurement resource being within the time window,
the input information corresponding to the at least one measurement resource belongs to a same group.

9. The method according to any one of claims 6 to 8, wherein the configuration information comprises at least one of length information, starting information, or period information;
the length information is used to configure a length of the time window;
the starting information is used to configure a starting position of the time window;
the period information is used to configure a period of the time window.

10. The method according to any one of claims 1 to 5, wherein determining the grouping of the first input information of the first AI model, comprises:
receiving indication information, wherein the indication information is used to indicate the grouping of the first input information of the first AI model; and
determining the grouping of the first input information according to the indication information.

11. The method according to any one of claims 6 to 10, wherein the method further comprises:
sending first position information, wherein the first position information is used to indicate a position of the first input information in the group or a position of the first processing information in the group.

12. The method according to any one of claims 1 to 5, wherein determining the CSI reporting of the first input information and/or the first processing information, comprises:
in response to a first CSI report in which the first input information and/or the first processing information is comprised being not reported, sending a second CSI report, wherein the second CSI report comprises the first input information and/or the first processing information; or
in response to a first CSI report in which the first input information and/or the first processing information is comprised being not reported, sending the first input information and/or the first processing information at an available time domain position after a time domain position of the first CSI report.

13. The method according to any one of claims 1 to 5, wherein determining the CSI reporting of the first input information and/or the first processing information, comprises:
in response to a first CSI report in which the first input information and/or the first processing information is comprised being not reported, sending a second CSI report, wherein the second CSI report comprises the first input information and/or the first processing information, and second input information and/or second processing information;
wherein the second processing information is information obtained by inputting the second input information into the first AI model or information obtained by further processing information obtained by inputting the second input information into the first AI model;
wherein the first input information and the second input information are different input information.

14. The method according to claim 13, wherein the first input information and the second input information are in a same group or in different groups; and in response to the first input information and the second input information being in different groups, the second input information is initial input information in a group.

15. The method according to any one of claims 12 to 14, further comprising:
sending postponement information, wherein the postponement information is used to indicate that the first input information and/or the first processing information is postponed reporting for the first CSI report.

16. The method according to any one of claims 1 to 5, wherein determining the CSI reporting of the first input information and/or the first processing information, comprises:
in response to a first CSI report in which the first input information and/or the first processing information is comprised being not reported, no longer sending the first input information and/or the first processing information, and sending a third CSI report, wherein the third CSI report comprises third input information and/or third processing information;
wherein the third processing information is information obtained by inputting the third input information into the first AI model or information obtained by further processing information obtained by inputting the third input information into the first AI model;
wherein the first input information and the third input information are different input information.

17. The method according to claim 16, wherein the first input information and the third input information are in different groups, and the third input information is initial input information in a group.

18. A communication method, comprising:
sending configuration information, wherein the configuration information is used to configure a time window, and the time window is used to determine grouping of first input information of a first AI model; or
sending indication information, wherein the indication information is used to indicate grouping of first input information of a first AI model;
wherein the first AI model is used for channel state information, CSI, compression.

19. The method according to claim 18, wherein the first AI model is used to perform CSI compression for initial input information, and perform CSI compression for non-initial input information by using first historical information;
the first historical information comprises at least one of historical input information, historical processing information, or historical compression intermediate information, the historical processing information is information obtained by inputting the historical input information into the first AI model or information obtained by further processing information obtained by inputting the historical input information into the first AI model, and the historical compression intermediate information is information generated by the first AI model in a process of compressing the historical input information.

20. The method according to claim 18, wherein historical input information within a group participates in CSI compression of non-initial input information within the same group, and all input information in a group does not participate in CSI compression of any input information in other groups.

21. The method according to any one of claims 18 to 20, wherein in response to the first input information being among input information corresponding to at least one CSI report, and a time domain position of the at least one CSI report being within the time window, the input information corresponding to the at least one CSI report belongs to a same group; or
in response to the first input information being among input information corresponding to at least one measurement resource, and a time domain position of the at least one measurement resource being within the time window or a time domain position of a CSI report associated with the at least one measurement resource being within the time window, the input information corresponding to the at least one measurement resource belongs to a same group.

22. The method according to any one of claims 18 to 21, wherein the configuration information comprises at least one of length information, starting information, or period information;
the length information is used to configure a length of the time window;
the starting information is used to configure a starting position of the time window;
the period information is used to configure a period of the time window.

23. A communication method, comprising:
in response to a first CSI report in which first input information and/or first processing information of a first AI model is comprised being not reported, receiving a second CSI report, wherein the second CSI report comprises the first input information and/or the first processing information, or the second CSI report comprises the first input information and/or the first processing information, and second input information and/or second processing information, wherein the first input information and the second input information are different input information; or
in response to a first CSI report in which first input information and/or first processing information of a first AI model is comprised being not reported, receiving the first input information and/or the first processing information at an available time domain position after a time domain position of the first CSI report; or
in response to a first CSI report in which first input information and/or first processing information of a first AI model is comprised being not reported, receiving a third CSI report, wherein the third CSI report comprises third input information and/or third processing information, wherein the first input information and the third input information are different input information;
wherein the first AI model is used for CSI compression, the first processing information is information obtained by inputting the first input information into the first AI model or information obtained by further processing information obtained by inputting the first input information into the first AI model, the second processing information is information obtained by inputting the second input information into the first AI model or information obtained by further processing information obtained by inputting the second input information into the first AI model, and the third processing information is information obtained by inputting the third input information into the first AI model or information obtained by further processing information obtained by inputting the third input information into the first AI model.

24. The method according to claim 23, wherein the first input information and the second input information are in a same group or in different groups; and in response to the first input information and the second input information being in different groups, the second input information is initial input information in a group; or
the first input information and the third input information are in different groups, and the third input information is initial input information in a group.

25. The method according to claim 23 or 24, further comprising:
receiving postponement information, wherein the postponement information is used to indicate that the first input information and/or the first processing information is postponed reporting for the first CSI report.

26. A communication apparatus, comprising:
a determining unit, configured to grouping of first input information of a first AI model, or determine channel state information, CSI, reporting of first input information and/or first processing information;
wherein the first AI model is used for CSI compression, and the first processing information is information obtained by inputting the first input information into the first AI model or information obtained by further processing information obtained by inputting the first input information into the first AI model.

27. The apparatus according to claim 26, wherein the first AI model is used to perform CSI compression for initial input information, and perform CSI compression for non-initial input information by using first historical information;
the first historical information comprises at least one of historical input information, historical processing information, or historical compression intermediate information, the historical processing information is information obtained by inputting the historical input information into the first AI model or information obtained by further processing information obtained by inputting the historical input information into the first AI model, and the historical compression intermediate information is information generated by the first AI model in a process of compressing the historical input information.

28. The apparatus according to claim 26, wherein historical input information within a group participates in CSI compression of non-initial input information within the same group, and all input information in a group does not participate in CSI compression of any input information in other groups.

29. The apparatus according to claim 26, wherein the first input information is among input information corresponding to at least one CSI report, and a time domain behavior of the at least one CSI report is at least one of periodic, semi-persistent, or aperiodic; or,
the first input information is among input information corresponding to at least one measurement resource;
a time domain behavior of the at least one measurement resource is at least one of periodic, semi-persistent, or aperiodic.

30. The apparatus according to claim 29, wherein the input information corresponding to the at least one CSI report is input into the first AI model according to an order of time domain positions of CSI reports or a magnitude order of identities, IDs, of CSI reports; or,
the input information corresponding to the at least one measurement resource is input into the first AI model according to an order of time domain positions of measurement resources or a magnitude order of IDs of measurement resources.

31. The apparatus according to any one of claims 26 to 30, wherein during determining the grouping of the first input information of the first AI model, the determining unit is configured to:
receive configuration information, wherein the configuration information is used to configure a time window; and
determine the grouping of the first input information of the first AI model according to the time window.

32. The apparatus according to claim 31, wherein in response to the first input information being among input information corresponding to at least one CSI report, and a time domain position of the at least one CSI report being within the time window,
the input information corresponding to the at least one CSI report belongs to a same group.

33. The apparatus according to claim 31, wherein in response to the first input information being among input information corresponding to at least one measurement resource, and a time domain position of the at least one measurement resource being within the time window or a time domain position of a CSI report associated with the at least one measurement resource being within the time window,
the input information corresponding to the at least one measurement resource belongs to a same group.

34. The apparatus according to any one of claims 31 to 33, wherein the configuration information comprises at least one of length information, starting information, or period information;
the length information is used to configure a length of the time window;
the starting information is used to configure a starting position of the time window;
the period information is used to configure a period of the time window.

35. The apparatus according to any one of claims 26 to 30, wherein during determining the grouping of the first input information of the first AI model, the determining unit is configured to:
receive indication information, wherein the indication information is used to indicate the grouping of the first input information of the first AI model; and
determine the grouping of the first input information according to the indication information.

36. The apparatus according to any one of claims 31 to 35, further comprising a sending unit;
wherein the sending unit is configured to send first position information, wherein the first position information is used to indicate a position of the first input information in the group or a position of the first processing information in the group.

37. The apparatus according to any one of claims 26 to 30, wherein during determining the CSI reporting of the first input information and/or the first processing information, the determining unit is configured to:
in response to a first CSI report in which the first input information and/or the first processing information is comprised being not reported, send a second CSI report, wherein the second CSI report comprises the first input information and/or the first processing information; or
in response to a first CSI report in which the first input information and/or the first processing information is comprised being not reported, send the first input information and/or the first processing information at an available time domain position after a time domain position of the first CSI report.

38. The apparatus according to any one of claims 26 to 30, wherein during determining the CSI reporting of the first input information and/or the first processing information, the determining unit is configured to:
in response to a first CSI report in which the first input information and/or the first processing information is comprised being not reported, send a second CSI report, wherein the second CSI report comprises the first input information and/or the first processing information, and second input information and/or second processing information;
wherein the second processing information is information obtained by inputting the second input information into the first AI model or information obtained by further processing information obtained by inputting the second input information into the first AI model;
wherein the first input information and the second input information are different input information.

39. The apparatus according to claim 38, wherein the first input information and the second input information are in a same group or in different groups; and in response to the first input information and the second input information being in different groups, the second input information is initial input information in a group.

40. The apparatus according to any one of claims 37 to 39, further comprising a sending unit;
wherein the sending unit is configured to send postponement information, wherein the postponement information is used to indicate that the first input information and/or the first processing information is postponed reporting for the first CSI report.

41. The apparatus according to any one of claims 26 to 30, wherein during determining the CSI reporting of the first input information and/or the first processing information, the determining unit is configured to:
in response to a first CSI report in which the first input information and/or the first processing information is comprised being not reported, no longer send the first input information and/or the first processing information, and send a third CSI report, wherein the third CSI report comprises third input information and/or third processing information;
wherein the third processing information is information obtained by inputting the third input information into the first AI model or information obtained by further processing information obtained by inputting the third input information into the first AI model;
wherein the first input information and the third input information are different input information.

42. The apparatus according to claim 41, wherein the first input information and the third input information are in different groups, and the third input information is initial input information in a group.

43. A communication apparatus, comprising:
a sending unit, configured to send configuration information, wherein the configuration information is used to configure a time window, and the time window is used to determine grouping of first input information of a first AI model; or configured to send indication information, wherein the indication information is used to indicate grouping of first input information of a first AI model;
wherein the first AI model is used for channel state information, CSI, compression.

44. The apparatus according to claim 43, wherein the first AI model is used to perform CSI compression for initial input information, and perform CSI compression for non-initial input information by using first historical information;
the first historical information comprises at least one of historical input information, historical processing information, or historical compression intermediate information, the historical processing information is information obtained by inputting the historical input information into the first AI model or information obtained by further processing information obtained by inputting the historical input information into the first AI model, and the historical compression intermediate information is information generated by the first AI model in a process of compressing the historical input information.

45. The apparatus according to claim 43, wherein historical input information within a group participates in CSI compression of non-initial input information within the same group, and all input information in a group does not participate in CSI compression of any input information in other groups.

46. The apparatus according to any one of claims 43 to 45, wherein in response to the first input information being among input information corresponding to at least one CSI report, and a time domain position of the at least one CSI report being within the time window, the input information corresponding to the at least one CSI report belongs to a same group; or
in response to the first input information being among input information corresponding to at least one measurement resource, and a time domain position of the at least one measurement resource being within the time window or a time domain position of a CSI report associated with the at least one measurement resource being within the time window, the input information corresponding to the at least one measurement resource belongs to a same group.

47. The apparatus according to any one of claims 43 to 46, wherein the configuration information comprises at least one of length information, starting information, or period information;
the length information is used to configure a length of the time window;
the starting information is used to configure a starting position of the time window;
the period information is used to configure a period of the time window.

48. A communication apparatus, comprising a receiving unit, wherein the receiving unit is configured to:
in response to a first CSI report in which first input information and/or first processing information of a first AI model is comprised being not reported, receive a second CSI report, wherein the second CSI report comprises the first input information and/or the first processing information, or the second CSI report comprises the first input information and/or the first processing information, and second input information and/or second processing information, wherein the first input information and the second input information are different input information; or
in response to a first CSI report in which first input information and/or first processing information of a first AI model is comprised being not reported, receive the first input information and/or the first processing information at an available time domain position after a time domain position of the first CSI report; or
in response to a first CSI report in which first input information and/or first processing information of a first AI model is comprised being not reported, receive a third CSI report, wherein the third CSI report comprises third input information and/or third processing information, wherein the first input information and the third input information are different input information;
wherein the first AI model is used for CSI compression, the first processing information is information obtained by inputting the first input information into the first AI model or information obtained by further processing information obtained by inputting the first input information into the first AI model, the second processing information is information obtained by inputting the second input information into the first AI model or information obtained by further processing information obtained by inputting the second input information into the first AI model, and the third processing information is information obtained by inputting the third input information into the first AI model or information obtained by further processing information obtained by inputting the third input information into the first AI model.

49. The apparatus according to claim 48, wherein the first input information and the second input information are in a same group or in different groups; and in response to the first input information and the second input information being in different groups, the second input information is initial input information in a group; or
the first input information and the third input information are in different groups, and the third input information is initial input information in a group.

50. The apparatus according to claim 48 or 49, further comprising:
receiving postponement information, wherein the postponement information is used to indicate that the first input information and/or the first processing information is postponed reporting for the first CSI report.

51. A terminal device, comprising a processor, a memory, and a computer program or instructions stored in the memory, wherein the processor, upon executing the computer program or instructions, implements steps of the method according to any one of claims 1 to 17.

52. A network device, comprising a processor, a memory, and a computer program or instructions stored in the memory, wherein the processor, upon executing the computer program or instructions, implements steps of the method according to any one of claims 18 to 22 or 23 to 25.

53. A chip, comprising a processor and a communication interface, wherein the processor, through the communication interface, performs steps of the method according to any one of claims 1 to 25.

54. A computer-readable storage medium, wherein the computer-readable storage medium stores a computer program or instructions, and when the computer program or instructions are executed, steps of the method according to any one of claims 1 to 25 are performed.
